# EUROPEAN PATENT SPECIFICATION

(11) **EP 3 681 263 B1**
(45) Date of publication and mention of the grant of the patent: **02.11.2022**
(21) Application number: 18786455.8
(22) Date of filing: 11.09.2018
(51) Int. Cl.: A01D 41/127, G06T 3/40, G06T 7/00, H04N 9/04

(54) **GRAIN HANDLING SYSTEM AND METHOD**
SYSTEM UND VERFAHREN ZUR KORNHANDHABUNG
SYSTÈME ET PROCÉDÉ DE MANIPULATION DE GRAINS

(30) Priority: 12.09.2017 US 201715702621
(43) Date of publication of application: 22.07.2020
(73) Proprietor: Intelligent Agricultural Solutions LLC, Fargo, ND 58102 (US)
(72) Inventor: SCHLEUSNER, Bradley, Fargo, North Dakota 58102 (US); BREMER, Marshall, Fargo, North Dakota 58102 (US); BUTTS, Nickolas, Fargo, North Dakota 58102 (US)
(74) Representative: AGCO Intellectual Property Department
(86) International application number: PCT/US2018/050442
(87) International publication number: WO 2019/055405

(56) References cited:
- US-A- 5 162 832
- US-A1- 2010 066 485
- US-A1- 2014 135 082
- US-A1- 2017 235 471
- US-A1- 2017 251 600

## Description

### BACKGROUND OF THE INVENTION

### 1. Field of the Invention

This invention relates generally to the field of grain handling, and more specifically to a system and method of sensing grain quality and flow, for example, in an agricultural vehicle or on a grain elevator, including an acoustic trigger subsystem for monitoring particulate dynamics.

### 2. Description of the Related Art

There is a desire to automate the adjustment of a combine (also known as a "harvester") so that very little human know-how is required to operate the vehicle. This would enable the hiring of unskilled labor to operate the combine, reducing the cost to the farmer. It could also increase the efficiency of the harvesting process, and therefore the crop yield and machine productivity.

Attempts have been made to automate combines already, but the sensors that have been used to sense the necessary conditions, such as load on the machine and the cleanliness of the crop being harvested, are inadequate for the job. US-2017/235471 discloses a harvesting machine with automatic adjustment functionality. A grain quality sensor is disclosed having a lens, a filter, a photosite array, an illumination source and an electronics module.

What is needed in the art is a method and system for automating a combine that relies on advanced sensors that can detect and monitor the amount and quality of material moving through the combine at any time.

### SUMMARY OF THE INVENTION

This invention is directed to a grain handling system and a method of handling grain as defined by the appended claims.

In one aspect of the disclosure, which does not fall within scope the appended claims, a harvesting machine capable of automatic adjustment is provided, comprising a plurality of material flow sensors, a control system, a processor, and software, wherein the material flow sensors are capable of sensing an amount of crop material passing by them, wherein the control system is capable of adjusting a set of internal elements of the harvesting machine, wherein the software is hosted on the processor, wherein the processor is operatively coupled to the control system and the plurality of material flow sensors, wherein the software uses information sensed by the plurality of material flow sensors to determine if the set of internal elements of the harvesting machine are set for optimal machine performance, and wherein the software sends commands to the set of internal elements of the harvesting machine in order to improve the machine performance.

In another aspect of the disclosure, which can be used in the context of the invention, a material flow sensor is provided, comprising an acoustic chamber, an impact plate and a housing, a pneumatic impulse line, a microphone, and an electronics module, wherein the acoustic chamber and the microphone are connected by the pneumatic impulse line, wherein the housing is shaped so as to direct sound waves created by at least one object striking the impact plate into the pneumatic impulse line, wherein the sound waves move through the pneumatic impulse line into the microphone, wherein the microphone detects the sound waves and converts them into an electrical signal, wherein the microphone is electrically connected to the electronics module, and wherein the electronics module analyzes the electrical signal and converts it into a representative mass of the at least one object striking the impact plate.

In yet another aspect of the disclosure, which can be used in the context of the invention, a grain quality sensor is provided, comprising a lens, a filter, a photosite array, at least one illumination source, and an electronics module, wherein the filter is placed between the lens and the photosite array, wherein the illumination source directs light containing a known set of wavelengths onto a crop sample, wherein the lens picks up any light reflected by the crop sample and directs it into the filter, wherein the filter allows light to pass into different parts of the photosite array such that certain locations on the photosite array only get certain wavelengths of the reflected light and other certain locations on the photosite array only get other certain wavelengths of the reflected light, wherein the electronics module is electrically connected to the photosite array and capable of determining which parts of the photosite array received light and what wavelengths the light received was, wherein the electronics module can analyze the optical data received by the photosite array, wherein the analysis of the optical data is used to determine the composition of different parts of the crop sample, and wherein no image of the crop sample is ever created.

In yet another aspect of the disclosure, which can be used in the context of the invention, a crop quality sensor is provided, comprising an illumination source, an imaging device, a processor; and software executing on the processor, wherein the illumination source is directed onto a crop sample, wherein the crop sample is such that individual kernels of the crop have a shiny outer casing and a dull inner surface when broken open, wherein an image is taken with the imaging device of the illuminated crop sample, wherein the software is executing on the processor, wherein the software is used to analyze the image to identify the outlines of individual kernels and to identify which of those outlines contain a specular highlight, and wherein the presence of a specular highlight within an outline is indicative that that kernel is whole and unbroken and the absence of such a specular highlight is indicative of a broken kernel.

In yet another aspect of the disclosure, which can be used in the context of the invention, an adaptive algorithm utilizes inputs from a sensor, such as a microphone for acoustic sensing or an accelerometer for motion sensing, for monitoring and controlling combine, elevator or other equipment operation.

The features, functions, and advantages can be achieved independently in various embodiments of the present invention or may be combined in yet other embodiments in which further details can be seen with reference to the following description and drawings.

### BRIEF DESCRIPTION OF THE DRAWINGS

The drawings constitute a part of this specification and include exemplary embodiments of the invention illustrating various objects and features thereof, wherein like references are generally numbered alike in the several views.
Fig. 1 is a block diagram of a combine showing the various components of the combine involved, along with the placement of sensors.
Fig. 2A shows a block diagram of a camera or "imaging device" from the prior art and how it is used to capture an image.
Fig. 2B shows a block diagram of an optical data capture sensor which can be used in the present invention and how it is used to determine the composition of a crop sample without taking images.
Fig. 2C is a perspective view of one embodiment of an optical data capture sensor which can be used in the present invention.
Fig. 2D is a side view of one embodiment of an optical data capture sensor which can be used in the present invention.
Fig. 2E illustrates the creation of "partial images" or "layer images" that eliminate visual elements present in the original subject matter, which can be used in the context of the present invention.
Fig. 2F illustrates an alternate embodiment of a grain quality sensor that detects damaged grain by detecting the lack of specular highlights on certain kernels.
Fig. 2G shows an image that has been processed to highlight "bright" spots or specular highlights.
Fig. 3A is a flowchart showing the processes used to create the numeric values and other outputs of the optical data capture sensor.
Fig. 3B illustrates one embodiment of an algorithm for analyzing values in a photosite array to determine the content of a grain or crop sample.
Fig. 3C describes how the demosaicing process of the prior art works.
Fig. 3D illustrates how introducing the demosaicing process of the prior art into the process of Fig. 3A may improve performance.
Fig. 4A shows the clean grain elevator of a typical combine and the sensors associated with the clean grain elevator as defined for use in the present invention.
Fig. 4B shows an alternate mounting location and system for the optical data capture sensor (grain quality sensor) that can be used with the present invention.
Fig. 5 shows a flowchart displaying image processing and statistical analysis functions of the processing unit of a grain quality sensor for use with the present invention.
Fig. 6A shows image data subsets and corresponding hue pixel distribution histograms of crop material image data only including clean grain.
Fig. 6B shows image data subsets and corresponding hue pixel distribution histograms of crop material image data including clean grain, damaged grain, and material other than grain (MOG).
Fig. 7 is a flowchart showing image processing and statistical analysis functions of the processing unit of a grain quality sensor for use with the present invention.
Fig. 8 is a fragmentary, upper, perspective view of a grain elevator with a grain sensing system which can be used in the present invention.
Fig. 9 is a fragmentary, side elevational view thereof, particularly showing the throw arc of particulate material, such as grain, within a piece of equipment.
Fig. 10 is a fragmentary, lower, perspective view thereof.
Fig. 11 is a block diagram showing data flow in practicing a method of the present invention with the grain sensing system.

### DETAILED DESCRIPTION OF THE PREFERRED EMBODIMENTS

### I. Introduction and Environment

As required, detailed aspects of the present invention are disclosed herein, however, it is to be understood that the disclosed aspects are merely exemplary of the invention, which may be embodied in various forms. Therefore, specific structural and functional details disclosed herein are not to be interpreted as limiting, but merely as a basis for the claims and as a representative basis for teaching one skilled in the art how to variously employ the present invention which is defined by the appended claims.

Certain terminology will be used in the following description for convenience in reference only and will not be limiting. For example, up, down, front, back, right and left refer to the invention as orientated in the view being referred to. The words, "inwardly" and "outwardly" refer to directions toward and away from, respectively, the geometric center of the aspect being described and designated parts thereof. Forwardly and rearwardly are generally in reference to the direction of travel, if appropriate. Said terminology will include the words specifically mentioned, derivatives thereof and words of similar meaning.

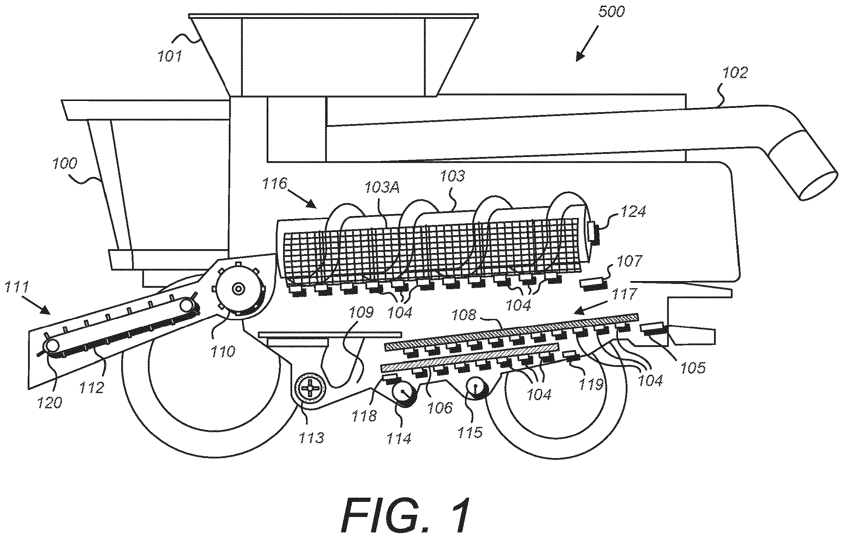

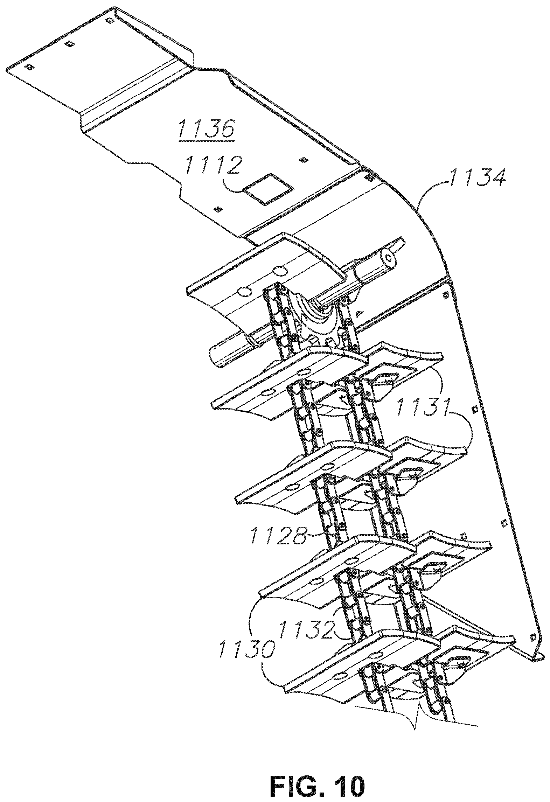

With reference now to the drawings, and in particular to Figs. 1 through 11 thereof, the grain handling system and the method of handling grain according to the invention will be described. The description also covers a method and a system of automating the adjustment of a combine, which per se do not fall within the scope of the appended claims. Also described herein are the various of components which can be used in the claimed grain handling system and the method of handling grain. The components as such do not fall within the scope of the appended claims.

In general terms, the present disclosure aims at automating the adjustment of a combine by following a series of steps, including:
A. Equipping an agricultural combine with new sensors placed throughout the combine to sense the state of the material flowing through the machine at any given time and location internal to the machine.
B. Collecting and analyzing the data gathered on the material flow.
C. Determine which adjustments could be made to internal components of the combine (based on the analysis of the data collected from the sensors) to optimize the combine's performance.
D. Automatically make the adjustments to the combine components to optimize the combine's performance.
E. Make recommendations to the operator. of the combine, or provide them with actionable data, so that they may make manual adjustments to the combine components to optimize the combine's performance.

Figs. 1 through 4B describe types of sensors used to complete Steps A and B of the above process.

### II. Crop Material Flow Sensor Type and Placement

The key is to be able to detect the status of the machine (the combine) at any given point, especially to have detailed information on the flow of crop material through the combine system and the condition of the crop material.

At optimal/ideal performance, the crop material collected (harvested) by a combine would be as close to 100% "clean grain" (the "grain" is the seeds of the crop being harvested) as possible with little to no cracked grain (grain that has been damaged, sometimes by the harvesting process itself) and little to no "material other than grain," often referred to by those skilled in the art as "MOG." Like the phrase "material other than grain" implies, MOG is any material that is moved through the combine during harvesting that is not grain. MOG may include things like rocks, dirt, trash, straw, and chaff (plant matter that is something other than the grain, such as the dry protective casings of seeds and grains, parts of the stems, flowers, leaves, etc.)

Improper settings of internal components of a combine harvesting machine can result in an increase in cracked grain and/or MOG, which lowers the value of the harvested crop by adding weight and volume to the harvested crop without adding additional value, or by otherwise reducing the quality of the grain. Improper settings can also result in clean grain being lost out the back of the combine, reducing yield.

For instance, the crop being harvested is collected by the combine and fed toward a spinning cylinder (called a "rotor") which spins the material against one or more curved metal gratings (called "concaves"). The concaves are shaped to match the curve of the rotor and can be moved farther and closer to the rotor as needed. As the rotor carries the crop material past the concaves, the crop material is threshed as it is moved over and impacts the concaves, knocking the seeds (the grain) loose from the rest of the plant. The spacing between the rotor and concave can be adjusted based on the crop type and the size of the grain being harvested (and other factors, such as crop load). If the concave is too close to the rotor, however, or if the rotor speed is too fast, the grain can be damaged and cracked, which makes it more likely to be lost in the harvesting process (more likely to be blown away with the chaff in the harvesting process) and also introduces problems in handling and storage of the grain, including harboring insects and increasing mold growth, as well as reducing the quality of the grain (for example, reducing protein content). Having the concave too close to the rotor can also over-thresh the grain, increasing the amount of MOG in the grain that passes through the concaves.

Therefore, if there was a way to detect the percentage of cracked grain that winds up in the clean grain tank during harvesting, then it would be possible to correct the rotor speed or the rotor-to-concave spacing in real time, during the harvesting process, to minimize the percentage of cracked grain.

This is just one example of a combine adjustment.

Turning now to Fig. 1, we will discuss the components of a combine 500 in additional detail, as well as the various types of sensors that can be added to the combine 500. A combine 500, also known as a combine harvester, or simply a harvester, is an agricultural machine that cuts, threshes, and cleans a grain crop in a single machine (in a single operation). It is typically self-propelled (a vehicle and not an implement) and driven into and through a crop at harvest time. The operation and working components of a traditional combine 500 are well known in the prior art and this specification will not address all elements of a combine, but will address those which are new and/or important to the operation.

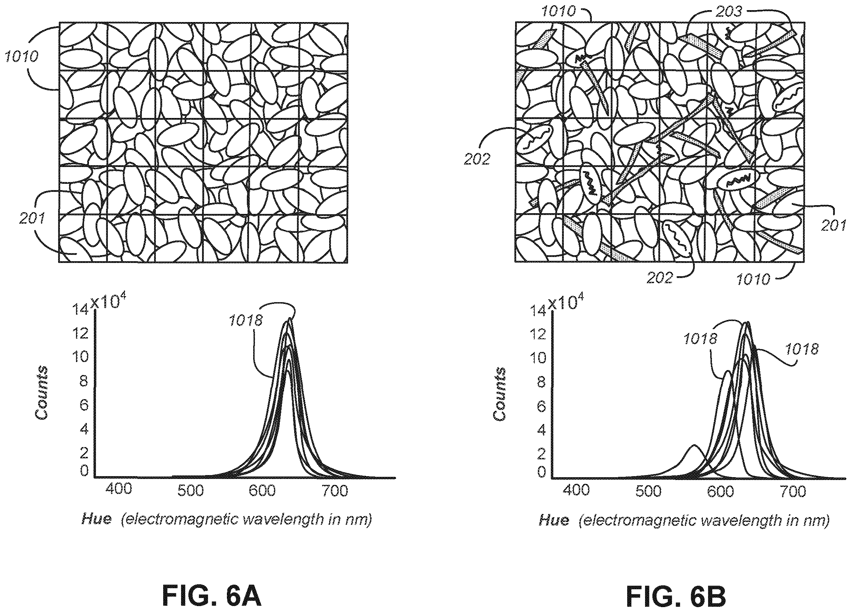

In Fig. 1, a combine 500 has a cab 100 where the operator of the vehicle is housed, and the cab 100 is typically located on what is considered to be the front of the combine 500 (the direction of forward travel). At the very front of a combine 500, a removable header 523 (see Figs. 6A-6C, header not included in Fig. 1) pushes into the crop in the direction of forward travel and cuts the crop and pulls it into the feeder housing 111. A typical header 523 has a reciprocating knife cutter bar for cutting the plants near the ground and a revolving reel to cause the cut crop to fall back into the feeder housing 111. Other versions of combines may use a "pick-up header" instead of a cutting header for crops that are cut by a separate machine and placed into windrows that are later picked up by the combine with such a header. The type of header is not pertinent to the present invention, and the example shown herein should not be considered limiting. The feeder housing 111 contains a conveyor chain 112 or similar mechanism to pull the cut crop up into the combine for threshing.

One of the important pieces of information for a self-adjusting combine is to know the load seen on the conveyor chain 112, as early as possible in the harvesting process, as crop moves into the feeder housing 111. Therefore, one or more potentiometers 120 are mounted on the front feed roller to measure the amount of deflection seen at this location. The material pushing into the feeder housing 111 will actually push up on the conveyor chain 112 mechanism, which "floats" up and down as the amount of material changes. The conveyor chain 112 mechanism typically can detect when one side of the feeder housing 111 has more material than the other, as both sides of the conveyor chain 112 float separately and therefore the separate sides are deflected upward based on the amount of material under each side, and the deflection can be translated into amount of mass, or load. In the typical embodiment, there is at least one potentiometer per side on the conveyor chain 112 mechanism, such that the deflection of each side can be measured independently.

This information can be digitized and sent to other locations on the combine 500 for use in combine adjustment (as well as other functions).

The crop material is delivered by the conveyor chain 112 to the feed accelerator 110, which is a rotating drum covered in paddles that pulls the crop material up into the machine, delivering it into the threshing assembly 116. The threshing assembly 116 includes a rotor 103 and one or more concaves 103A. The rotor 103 is a spinning cylinder with projections, such as paddles (also known as threshing elements), arranged in the shape of the inclined plane of an auger, on it such that is will push the crop material through the combine from the front end of the rotor 103 to the back end of the rotor 103. The crop material is pulled through the threshing assembly 116 by the spinning motion of the rotor 103, and, as it moves from front to back, the crop material is dragged across the concaves 103A, causing the crop material to be threshed. The concaves 103A are metal gratings with holes through which threshed grain (the seeds that are pulled or shaken off of the crop material) may drop. The material that passes through the concaves 103A drop into the cleaning shoe 117, where the crop material is further processed to separate the clean grain from the chaff before it is collected.

In the embodiment shown in Fig. 1, a series of crop material sensors 104 are placed on the bottom side of the concaves 103A. These crop material sensors 104 can detect the amount of material dropping on them and can, in the preferred embodiment, distinguish between grain and MOG. These crop material sensors 104 may be any type of appropriate sensor for detecting the impact of particles, including piezoelectric sensors, optical sensors, and mechanical sensors, but in the preferred embodiment are acoustic sensors which can detect the sound of material impacting the sensors and ideally distinguish between the heavier sounds of grain hitting the sensor and the lighter sounds of chaff hitting the sensors.

It is helpful to know the load on the rotor 103 in order to properly adjust the combine settings. The "rotor load" is the measure of the pressure put on the rotor 103, and one method of measuring this rotor load is to place a sensor on the rotor pulley actuator 124 which can measure the differences in load as the rotor pulley spins the rotor. The rotor load is calculated based on load on the rotor pulley actuator 124 and communicated to the combine system to use in determining the combine settings.

After the crop material passes through the rotor 103 and the concaves 103A, it falls down into the cleaning shoe 117. The cleaning shoe 117 typically includes a chaffer 108 and a sieve 106. The chaffer 108 and the sieve 106 are "filters" that typically have adjustable-size openings in them and which further aid in the separation of grain from MOG. The chaffer 108 typically has larger openings than the sieve 106, and so the chaffer 108 will allow larger pieces of crop material to pass through to the sieve 106. As the crop material falls on the chaffer 108 and sieve 106, further separation of the material occurs. Forced air generated by one or more fans 113 is propelled through channel 109 and directed up through the chaffer 108 and the sieve 106. The air will carry lighter material such as chaff up and out of the back of the combine 500 to be dispersed on the ground.

A rotor loss sensor 107 will detect the amount of material that falls from the back of the rotor (meaning it was not completely threshed as it traveled along the rotor). This rotor loss sensor 107 may be any appropriate sensor that detects the impact of crop material, and which can, in the preferred embodiment, distinguish between grain and MOG. The rotor loss sensor 107 may be any type of appropriate sensor for detecting the impact of particles, including piezoelectric sensors, optical sensors, and mechanical sensors, but in the preferred embodiment is an acoustic sensor which can detect the sound of material impacting the sensors at a minimum and, ideally, distinguish between the heavier sounds of grain hitting the sensor and the lighter sounds of chaff hitting the sensors.

At the back end of the chaffer 108 is a grain loss sensor 105. In the preferred embodiment, the grain loss sensor 105 is a sensor using acoustic sensor technology, which can detect the sound of material impacting the sensor and ideally distinguish between the heavier sounds of grain hitting the sensor and the lighter sounds of chaff hitting the sensors. The purpose of the grain loss sensor 105 is to detect the amount of clean grain that is being lost out of the back

At the back end of the sieve 106 is a tailings sensor 119. In the preferred embodiment, the tailings sensor 119 is a sensor using acoustic sensor technology, which can detect the sound of material impacting the sensor and ideally distinguish between the heavier sounds of grain hitting the sensor and the lighter sounds of chaff hitting the sensors. The purpose of the tailings sensor 119 is to detect the amount of tailings that falls out of the back of the cleaning shoe 117. In harvesting, "tailings" are a mixture of grain and the mature vegetation on which the grain grows, and, with respect to the combine, the tailings represent the crop material that falls out the back of the cleaning shoe 117. In a typical combine, the tailings will be given a "second chance", where they are collected by a tailings auger 115, which delivers the tailings to a tailing elevator (not shown in drawing) to be transported back to the rotor 103 for another attempt at threshing.

The heavier grain that is successfully threshed after traveling through the rotor 103 and concaves 103A and the cleaning shoe 117 will fall off the front end of the sieve 106 rather than being blown back by the air coming from the fan 113. The grain falling off the front end of the sieve 106 will impact a clean grain sensor 118. In the preferred embodiment, the clean grain sensor 118 is a sensor using acoustic sensor technology, which can detect the sound of material impacting the sensor and ideally distinguish between the heavier sounds of grain hitting the sensor and the lighter sounds of chaff hitting the sensors.

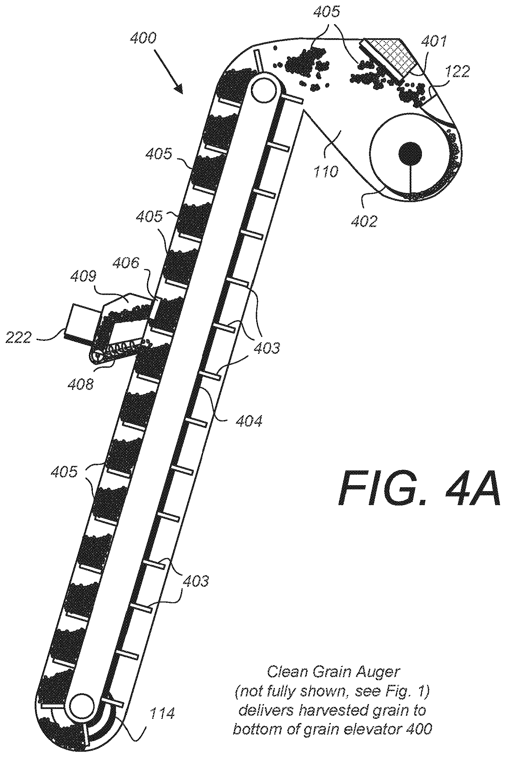

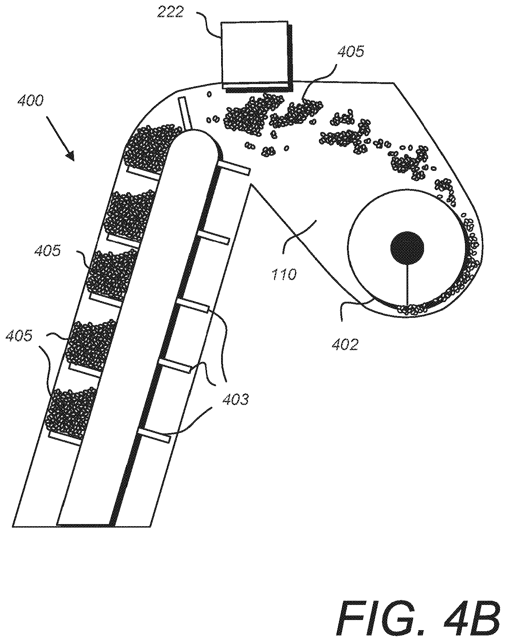

After impacting the clean grain sensor 118, the clean grain will drop into the clean grain auger 114 and be transported to a clean grain elevator 400 (not shown in this figure but presented in Fig. 4) where it is delivered to the grain tank 101.

Eventually, the grain captured in the grain tank 101 will be offloaded to an agricultural cart or vehicle. This offloading is done through the offload auger 102.

It should be noted that sensors 104, 105, 107, 118, and 119, are intended to be acoustic material flow sensors in the preferred embodiment, similar to the energy sensing acoustic technology (ESAT) sensors manufactured by Appareo systems, including those disclosed in WO/2012/12557.

An acoustic material flow sensor for a harvesting machine might comprise an acoustic chamber with an impact plate and a housing, a pneumatic impulse line, a microphone, and an electronics module. The housing of the acoustic material flow sensor is shaped so as to direct sound waves created by crop matter that is striking the impact plate into a pneumatic impulse line connected to the chamber. Once the sound waves enter the pneumatic impulse line, they travel down the line into a microphone connected to the other end of the pneumatic impulse line.

The microphone then detects the sound waves and converts them into an electrical signal that is a representation of a "sound power" derived from the energy of the sound waves collected. The electronics module analyzes the electrical signal and converts it into a representative mass of the crop matter striking the impact plate. This may be done by a specialized audio processor, designed specifically for the analysis of audio signals, such as a processing chip designed for use in music-related applications.

The acoustic material flow sensor may also be able to analyze the frequencies of the sounds generated by crop matter striking the impact plate, and determine if material of largely different densities is striking the plate. Crop matter that is moving through a harvesting machine often contains "material other than grain", or MOG, which may be rocks, soil, plant matter other than seed, etc. By distinguishing between sound waves representing different densities of crop matter, an approximate percentage of MOG contained in the crop matter can be determined.

However, these material flow sensors may comprise sensors of a variety of different structures and/or types, as would be known by one skilled in the art.

The purpose of Fig. 1 is to identify the various components of a combine and the variety of sensors needed to detect material flow through the combine at various points. Some of these sensors already exist in the prior art to collect information for use in other subsystems of a combine, and other sensors are new to the art and these new-to-the-art sensors will be described in additional detail in the remaining figures of this specification.

It should be noted that Fig. 1 represents one possible embodiment of a combine and is not intended to be limiting. For example, some combines place the rotor such that it is perpendicular to the direction of travel, rather than parallel to it. Some of the sensors described herein may be omitted without differing from the intent of the present application.

In addition to the sensors described in the previous section and as shown on Fig. 1, there are additional sensors that sense items other than the flow of material through the interior of the combine. These sensors, described in the following sections, include a grain quality sensor, a look-ahead crop mass sensor, a yield sensor, and a moisture sensor.

### III. Grain Quality Sensor

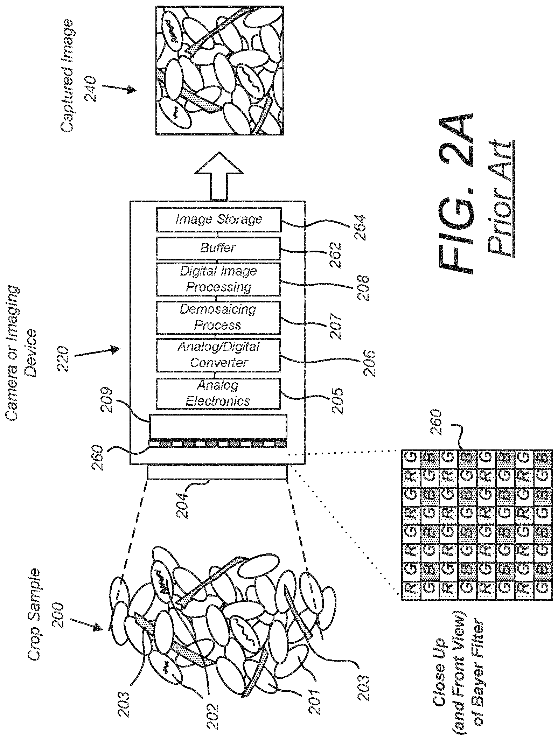

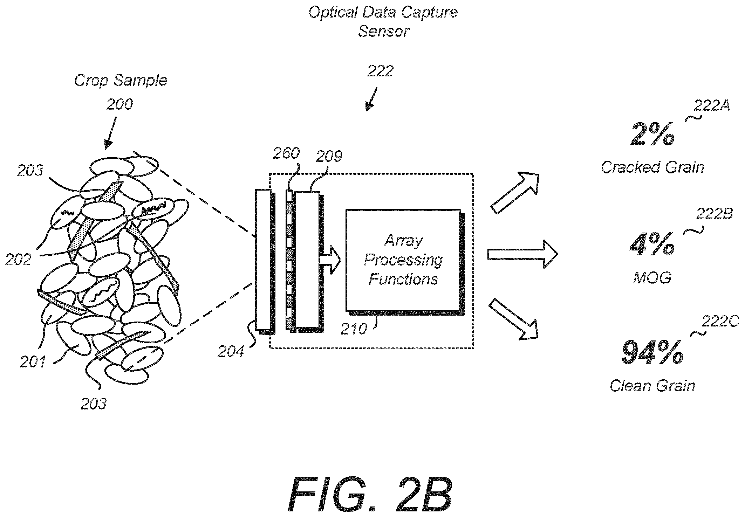

The following section, including the discussion of Figs. 2B through 4, presents a novel grain quality sensor for use in gathering data needed for the combine automation system and method. Fig. 2A shows a block diagram of a camera or "imaging device" from the prior art and how it is used to capture an image.

The concept behind a grain quality sensor is to somehow examine a sample of crop material from the clean grain tank of a harvester such as that shown in 101 on Fig. 1 to determine the percentage of (1) damaged grain, (2) material other than grain, and (3) clean grain. Damaged grain is grain or seeds of a crop for which the outer casing has been damaged, exposing the endosperm (the inside of the seed). Grain can be damaged by the harvesting process itself if the adjustments on the combine are not optimized. For instance, if the distance from the rotor to the concave gratings is too close, the grain can be caught between rotor and concave and threshed too "violently", causing damage to the outer casing of the grain/seed. Material other than grain, or MOG, as has been previously explained, is any plant material other than the seed, and can also include foreign matter such as rocks, soil, and other plant matter (such as weeds). Clean grain consists of undamaged grain/seed and no MOG.

By determining the percentages of damaged grain, MOG, and clean grain in a sample of harvested material, a control system for a combine can work to make automated adjustments to internal settings such as the distance from rotor to concave to improve the percentages of clean grain.

One way to analyze a grain sample to determine these percentages is to do it by image analysis. Several inventions in the prior art use a digital camera to take an image of a sample of grain and then analyze that image to search for cracked grain and MOG.

Fig. 2A shows a block diagram of a camera or "imaging device" from the prior art and shows how it is used to capture an image for analysis. A crop sample 200 contains a combination of clean grain 201, damaged grain 202, and MOG 203. Prior art inventions use a camera or similar imaging device 220 to capture an image 240 of the crop sample 200. The imaging device 220 comprises a lens 204, a color filter 260, a photosite array 209, and a series of functional blocks which are a mix of electronic hardware and firmware. There is a set of analog electronics 205 for powering and reading the photosite array 209, an analog to digital converter 206 for converting the analog voltage values read from the analog electronics 205 into digital values, a "demosaicing" process 207 which is required to compensate for the introduction of the color filter 260 (needed to produce an image with accurate color reproduction), digital image processing circuitry 208 required to perform the intensive amount of processing required to create a digital image, a memory buffer 262 to store the digital data as it is being assembled into a finished digital image, and finally image storage 264 to hold and maintain the final captured image 240.

The photosite array 209 consists of millions of tiny light cavities ("photosites") which can be uncovered to collect and store the photons of light reflected by an object or scene. Once the photosites have collected photons, the camera closes each of the photosites and then determines how many photons were collected by each. The relative quantity of photons in each cavity are then sorted into various intensity levels, whose precision is determined by bit depth (for example, 0 - 255 for an 8-bit image, or any other appropriate implementation).

However, the intensity levels calculated by the photosite array by themselves would only create grayscale (black and white) images, since these photosite cavities are unable to distinguish how many photons of each color they received. In order to capture color values of something, a filter 260 has to be placed over each cavity that permits only particular colors of light. A close-up view of one common type of filter 260 is shown in Figure 2A. Most current digital cameras can only capture one of three primary colors in each cavity, and so approximately 2/3 of the incoming light is captured by a photosite array 209 with a color filter 260 on the front.

As a result, a digital camera 220 has to approximate the other two primary colors in order to have full color at every photosite. A typical way of doing this is to have the camera 220 look at the neighboring photosites to see how much of the other color was received there, and then interpolate a value for the current location. For instance, if a photosite with a red filter only collects photons of red light, then that same photosite can look at the number of photons received by the neighboring or nearby blue photosites to determine the approximate blue value to use for the red photosite location. Something similar is done for the green value at the photosite. In other words, in order to create an accurate image 240, steps must be taken to counteract the effects introduced by the filter 260.

The most common type of color filter is called a "Bayer array," and this arrangement of filter colors is shown in the close up of the filter 209 shown in Figure 2A. This arrangement has twice as many green filters as it does either red or blue. The Bayer array (and any other arrangement of filters) introduces a "mosaic" pattern to the light intensity values captured in the photosite array 209, and so the "demosaicing process" step 207 is needed to create a final image 240 in order to get rid of the mosaic effect thus introduced.

The majority of the prior art inventions for grain quality sensing are based on the analysis of final, capture images 240. This limits these prior art inventions to accepting the "processing steps" (that is, steps 206, 207, and 208, as well as other processes built into modern digital cameras. Each of steps 206-208 may introduce changes in the creation of the final image 240 that ultimately must be "undone" during the grain quality determination process. In other words, prior art inventions which work by analyzing final captured images 240 are subject to the processing inherent in any modern digital camera or imaging device 220.

The present disclosure is an improvement in the art which "breaks open" the digital camera and looks at the raw photo data collected by the photosite array 209 without creating a captured image 240. Turning to Fig. 2B, an optical data capture sensor 222 comprises a lens 204 for capturing and directing photons of light into the photosite array 209. As with the imaging device 220 of the prior art, the photosite array 209 of the optical data capture sensor 222 is covered with a filter 260 for controlling which wavelengths of photons (light) are taken in by the individual photosites in the photosite array 209.

The lens 204, filter 260, and photosite array 209 are the only components that the optical data capture sensor 222 has in common with the imaging device 220 of the prior art. The optical data capture sensor 222 does not do the same functions that are done by the analog electronics 205, analog-to-digital converter 206, demosaicing process 207, and digital imaging processing 208 of the prior art imaging device 220. The optical data capture sensor 222 also does not require a buffer 262 and image storage 264, as there is no final captured image 240 created.

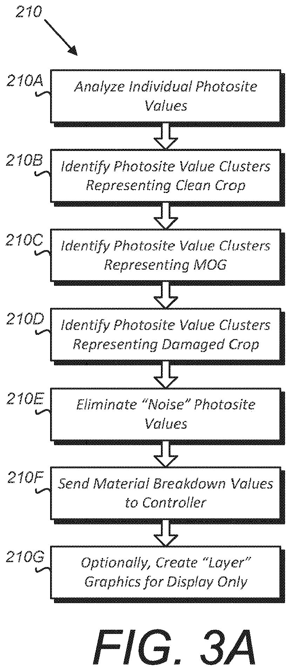

In place of the functions described in the previous paragraph, the optical data capture sensor 222 uses the raw data collected by the photosite array directly, without processing it and converting it into a captured image 240. This is done in a series of array processing functions 210, which will be detailed in the discussion of Figs. 3A-3C.

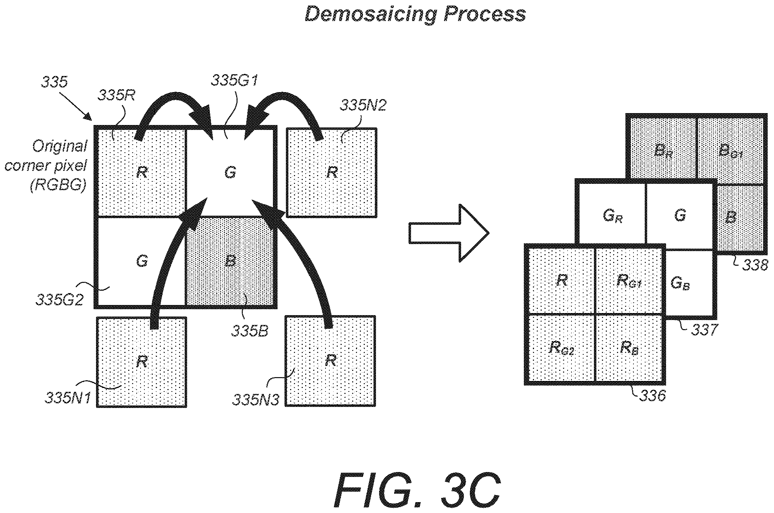

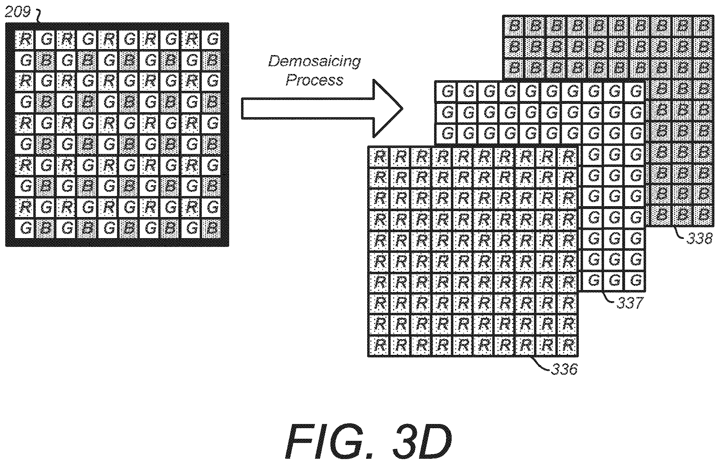

As an alternative, the demosaicing process 207 may be added to the array processing functions 210 as a means of increasing the performance of the grain quality analysis. This will be explained in more detail in the discussion of Figs. 3C and 3D.

The output of the array processing functions include information on the quality of the crop material 200, including the percentage of cracked grain detected (222A), the percentage of material other than grain, or MOG (222B), and the percentage of clean grain (222C). The information 222A, 222B, and 222C is calculated by the array processing functions 210 without ever creating a final captured image 240.

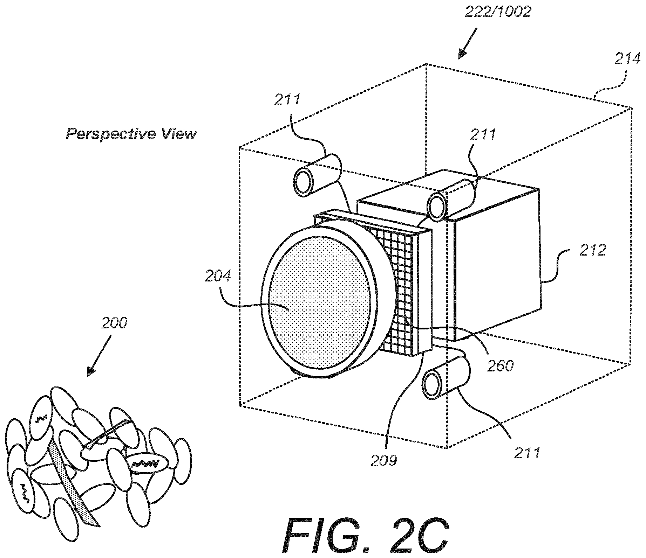

Moving to Fig. 2C, we see a perspective view of the optical data capture sensor 222. While Fig. 2B was intended to detail the functional aspects of one embodiment of an optical data capture sensor 222, Fig. 2C focuses more on the physical implementation.

Fig. 2C again shows the lens 204, the filter 260, and the photosite array 209, as before. In addition to these components, light sources 211 are added to Fig. 2C. These light sources 211 may be light emitting diodes (LEDs) or any other appropriate lighting source. The number of light sources 211 may vary from one embodiment to another, and the wavelength of light emitted by each light source 211 may be of a different wavelength, as may be required to capture the appropriate photon data reflected back from the crop sample 200. The use of these light sources 211 in analyzing the crop sample 200 will be discussed shortly.

A processing unit 212 provides power for the photosite array 209 and light sources 211, controls the inputs and outputs from the optical data capture sensor 222, and performs the processing carried out by the array processing functions 210. The entire module may be enclosed in an outer enclosure 214, shown here as a dotted line.

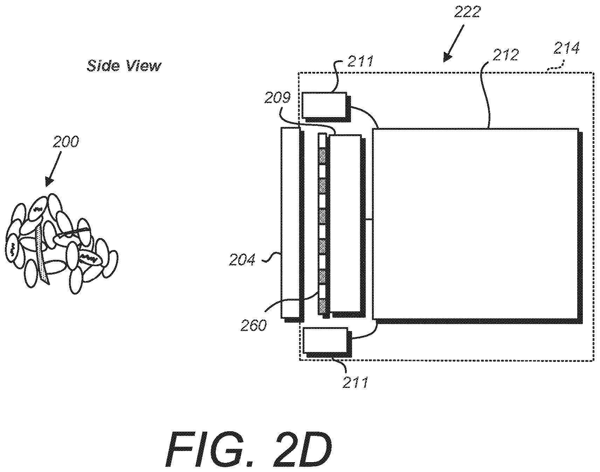

Fig. 2D is a side view of the embodiment of an optical data capture sensor 222 shown in Fig. 2C. It is provided to give an alternate view of the optical data capture sensor 222, but does not introduce any new functionality or components.

The following paragraphs shall describe one embodiment of an optical data capture sensor 222 and how it may be used to implement a grain quality sensor (also known as a "grain quality and cleanliness sensor"). The purpose of a grain quality sensor is to determine the levels of material other than grain (MOG) and broken kernels (cracked grain) in the clean grain path. The values are reported to the operator and provide inputs to the automation algorithm discussed later in this specification. The following description will refer to Figs. 2B, 2C, and 2D and will use the reference designators collectively from these figures as needed.

In one embodiment of a grain quality sensor, the crop sample 200 is illuminated with light sources 211 which emit, at a minimum, ultraviolet light (UV), green light, and red light. The wavelengths of the green and red light sources 211 are used to provide the maximum contrast among the color photosites in the photosite array 209. In other words, the green light source 211 should produce minimal excitation in the red and blue photosites in the photosite array 209 (as dictated by the transmission curves of the color pattern filter 260).

Doing this will maximize the ability to perform coarse spectroscopy with the 3 different types of photosites in the array 209 (those receiving only green, those receiving only blue, and those receiving only red photons). The UV light source 211 is chosen to provide maximum contrast between the reflective starchy interior of the grain and the bran, or outer casing, while maintaining reasonable sensitivity of the photosite array 209 and transmission through the lens 204 and filter 260.

A processing unit 212 analyzes the raw photosite array 209 data and determines the fractional amount of MOG and cracked grain so that it can be displayed to the operator and used as inputs to the automation algorithm.

Basic Algorithm: By shining light of different wavelengths on the crop sample 200, information can be gathered by the grain quality sensor (by the optical data capture sensor 222). Individual photosites from the array 209 which are dark (indicating relatively few photons of light collected in those areas) may indicate voids in the sample or noise and can be eliminated from consideration.

The inside of a grain kernel typically absorbs and reflects different wavelengths of light than the outer casing of the kernel. This fact can be used to detect damaged grain, as the wavelengths of light typically absorbed by the cracked, exposed inner kernel will be different than undamaged grain. The absorption and reflection of MOG will also be different than the absorption and reflection of clean grain and damaged grain.

The raw photosite array 209 data can then be analyzed for hue, saturation, and value (known as HSV by those skilled in the art, and also sometimes known as HSI, for hue, saturation, and intensity) to determine which photosites in the array 209 correspond to HSV values representing cracked grain, clean grain, and MOG. This algorithm is explained in detail in Figs. 3A through 3D, and the corresponding discussion.

Variations on the Algorithm: Other color spaces can be used instead of HSV, for example, using the ab plane of the Lab colorspace. Lightness or value (intensity of the black and white image) may also be useful in identifying objects.

The image is broken into a series of sub-sections. Many of these sections will contain only grain and the spread in the corresponding distribution of values along any particular dimensions in whichever color space will be minimized. This minimum spread is used to determine the thresholds for the entire image.

**Notes:** Hue is essentially the color of the light collected in the photosite array. Saturation or chroma is a measure of the purity of the color, so that white or gray are at one extreme and red, orange or another pure color are at the other extreme. Value is the lightness of the area, so that white and gray only vary in intensity.

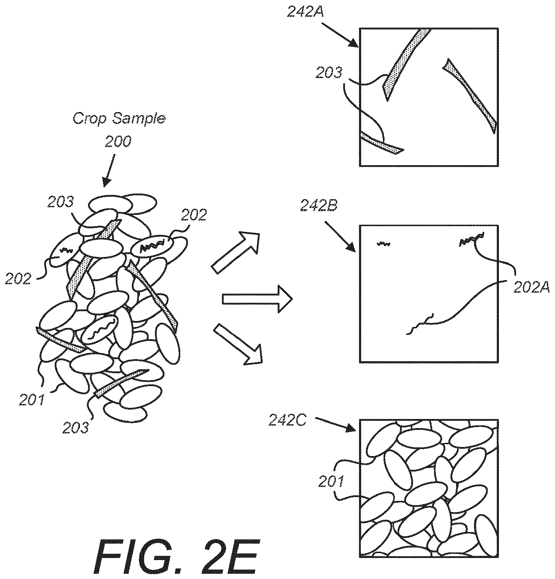

Fig. 2E illustrates how the present invention can create "partial images" or "layer images" that eliminate visual elements present in the original subject matter. It is important to note at this point that the creation of images as discussed here in Fig. 2E is not required for the optical data capture sensor 222 previously discussed. As stated then, the optical data capture sensor 222 does NOT use captured images 240 to determine information on the crop sample 200. This is a separate function which can be performed using the present invention.

The optical data capture sensor 222 can be used, as previously described, to detect which photosites in the array 209 contain information related to clean grain 201, damaged grain 202, and/or MOG 203.

It would be possible, therefore, to segment the photosites into one of these categories (clean grain, damaged grain, and MOG) and to then have an algorithm that will create "partial images" that do not faithfully reproduce the original subject matter (in this case, the crop sample 200), but instead show only subsets of the original sample 200. For example, one partial image 242A may show only the MOG 203 detected in a sample. Other partial images (242B and 242C) show only the damaged grain 202 (or just the damaged section of the grain kernels, 202A) or only the clean grain 201.

This "partial image" concept can be applied in areas other than grain quality sensing. For example, one can imagine a camera implementing this present invention (an alternate embodiment of the optical data capture sensor 222) which will eliminate certain color patterns from the final produced images, such as eliminating the blue sky from an outdoor picture, and possibly replacing it with another color, such as white or black.

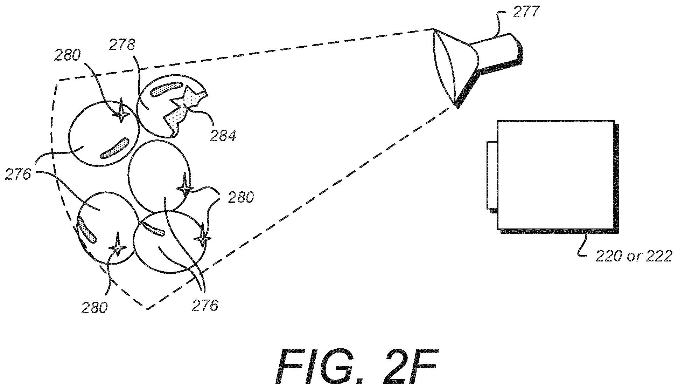

Fig. 2F illustrates an alternate embodiment of a grain quality sensor that detects damaged grain by detecting the lack of specular highlights on certain kernels. The previous discussion of a grain quality sensor and/or an optical data capture sensor may not apply well for all types of seeds or kernels. For example, the inside of a soybean is essentially the same color as the outside casing of a soybean, so using the types of color-based analysis of the raw pixel data as previously described may not be effective. An alternate method of analysis may be required.

Turning to Fig. 2F, we see an assortment of whole soybeans 276 and broken soybeans 278. When a light source 277 is shown on the soybeans 276 and broken soybeans 278, we see that the outer casing of whole soybeans 276 is "shiny" and will produce specular highlights 280 which will appear as bright spots in an image taken of the crop. On the contrary, the inside surface 284 of a broken soybean 278 is not "shiny" and therefore does not produce a specular highlight 280. When an image is taken of the soybeans (276, 278) with an imaging device 220 or an optical data capture sensor 222, the image can be analyzed to look for the number of soybeans 276 with specular highlights 280 and the number or broken soybeans 278 without specular highlights 280.

It should be noted that, while the specification has previously discussed grain quality sensors that do not use images or image processing, standard image processing may be required to identify the specular highlights on soybeans or other similar crops.

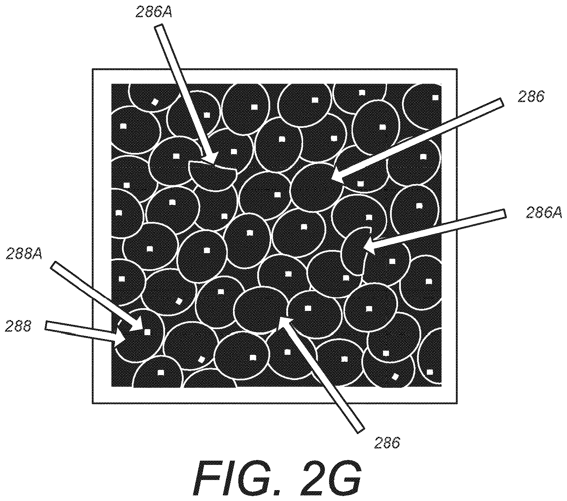

Turning now to Fig. 2G, we see an image that has been processed to highlight "bright" spots or specular highlights. Each point in the image (or in the raw pixel data, if image processing is not used) is analyzed for brightness/intensity. Those falling below a certain threshold are shown as black or dark points on the resulting image, and those meeting or above the threshold will be shown as light or white points on the image. The result of this image processing will look like the image shown in Fig. 2G. Please note that white arrows are used in Fig. 2G in place of standard lead lines because of the dark nature of the image shown.

The processed image as shown in Fig. 2G will show whole soybeans as white or light colored outlines 288 each containing a bright spot representing a specular highlight 288A. Broken soybeans will show as white or light-colored outlines 286 without a specular highlight within the outline 286. Some broken soybeans may be shown as irregular shapes 286A, indicating they are not whole soybeans.

An algorithm looking for broken soybeans in an image processed in this manner could identify broken soybeans by looking for nonstandard shapes (such as 286A in Fig. 2G) or by looking for shapes that do not contain a bright spot 288A within the outline (such as 286 in Fig. 2G).

It is important to note that this alternate embodiment of a grain quality sensor that uses the presence of specular highlights to identify undamaged kernels or seeds will work with any crop type where the outside casing of the kernel or seed is reflective and the inside surface of the same type of kernel or seed is not. Soybeans are used in the example but are not intended to be limiting in any way.

It is also important to note that the approach discussed above might be used to help identify material other than grain, or non-crop material. In a crop such as soybeans, the expected outline of the kernels will be a certain shape (in this case, generally circular) and a certain size. Any outlines outside of those expected shapes and sizes (for instance, a rectangular shape for soybeans, or a size significantly larger than a typical soybean) are likely non-crop material. The presence of a specular highlight inside of one of these "outlier outlines" would help to identify the object as non-crop material, or to otherwise provide information on the nature of the object.

Fig. 3A is a flowchart showing the processes used to create the numeric values and other outputs of the optical data capture sensor. The steps shown in Fig. 3A represent one embodiment only, and are not meant to be limiting, nor does the order of the steps shown in the flow necessarily mean that the steps shown have to be done in a certain order. The key concept captured in Fig. 3A is that all array processing functions 210 operate on individual photosite values (that is, on raw captured data) without producing a final image.

In Step 210A, each of the photosites in the photosite array 209 is analyzed to determine the number of photons detected (indicative of the amount of light received) and a determination is made as to the wavelength of light represented by each photosite based on the filter 260 that is covering the photosite array 209. In Step 210B, clusters of similar color levels are identified, and each cluster is compared to predicted values for clean grain to determine which of these clusters represent clean grain (or what percentage of the overall photosites in the array 209 appear to be representing clean grain). Steps 210C and 210D do the same analysis to determine the overall percentage of both MOG and damaged grain (or damaged crop), respectively. An optional Step 210E is performed in order to eliminate outliers or photosites that do not appear to match any of the surrounding photosite values (in other words, a single "dark" photosite surrounded by photosites representing clean grain is eliminated as probable noise.)

Finally, in Step 210F, the determined percentages (material breakdown values) determined in Steps 210B, 210C, and 210D are sent to the controller responsible for making automated adjustments to the combine or for displaying the values to an operator.

In optional Step 210G, "partial images" such as those discussed and shown in Fig. 2E may be generated for display to an operator.

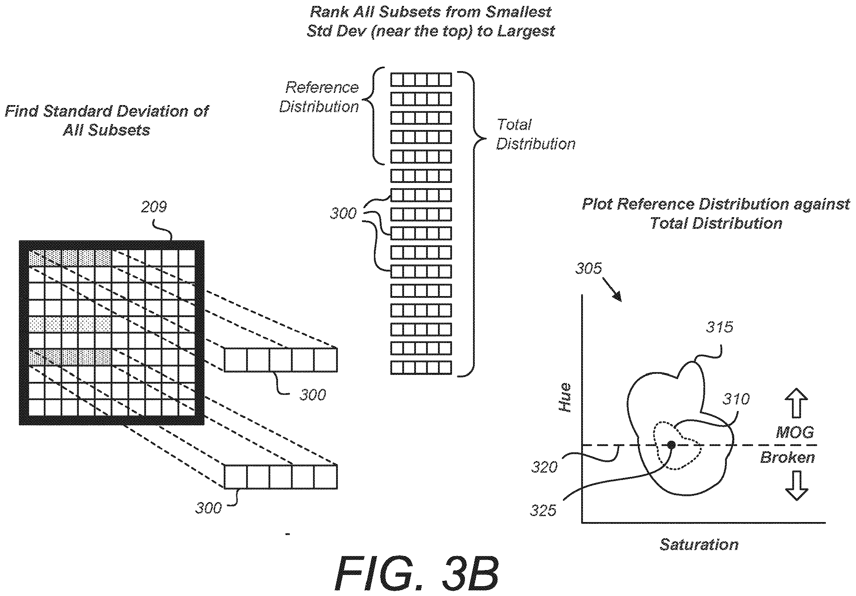

Fig. 3B illustrates one embodiment of an algorithm for analyzing values in a photosite array to determine the content of a grain or crop sample. Once raw data has been captured in the photosite array 209, all of the pixels in the array are grouped into subsets 300, and the "spread" of each pixel subset 300 is measured. In one embodiment, the "spread" is determined by taking the standard deviation of the pixels in the subset 300. If the standard deviation of a particular subset 300 is small, that means that all of the pixels in that subset 300 are close to the same color. A larger standard deviation in a subset 300 means that there is a larger "spread" or range of colors represented in the subset 300. In this example, which is meant purely for illustrative purposes, the size of the subset is 5 pixels, but any appropriate subset size may be chosen. Only a very small photosite array 209 is shown in Fig. 3B, just enough to illustrate the concept.

After the standard deviations for all of the subsets 300 have been determined, the subsets are placed in order by the size of the standard deviation. For example, in the center of Fig. 3B, the subsets 300 are shown arranged vertically from the smallest standard deviation at the top to the largest at the bottom. (This concept is shown graphically as a stack of subsets 300 in Fig. 3B, but the output in reality is a ranked list of standard deviations, from smallest to largest.)

Once the ranked list is created, a small number of subsets 300 near the top of the list (that is, the subsets 300 with the smallest standard deviations) are considered to be the "reference distribution," and the entire list of subsets 300 is considered to be the "total distribution."

The subsets 300 in the "reference distribution" should ideally be the subsets 300 that are closest to the desired color (for example, the color of clean grain). The histogram of the reference distribution can be plotted against the histogram of the total distribution of colors captured by the photosite array.

This is shown on the right side of Fig. 3B. In the plot of the histograms 305, the smaller dashed line represents the plot of the reference distribution 310. In this example, the histograms are plotted on a three-dimensional plot in the HSV color space (representing Hue, Saturation, and Value), but any other appropriate color space can be used with similar results.

It should be noted that the plot 305 is shown in only two dimensions (hue on the Y axis and saturation on the X axis), but there would also be a third axis rising up out of the figure, perpendicular to both the X and Y axes, and that would represent intensity. The intensity has been omitted for clarity in Fig. 3B, but its effect would be to give the histogram plots of the reference distribution 310 and the total distribution 315 a volume, with a third dimension of the two plots rising up out of the figure in the direction of the missing intensity axis.

The total distribution plot 315 is added to the histogram plot 305, superimposing it on the reference distribution plot 310. The total distribution plot 315 will always be at least as big as the reference distribution plot 310, but will typically be significantly larger, representing the larger color range present in the total distribution over the reference distribution. If the grain quality sensor is looking at a very pure sample of grain (that is, a sample that is almost 100 percent clean grain), the total distribution plot 315 may be almost as small as the reference distribution plot 310.

In one embodiment, the algorithm illustrated in Fig. 3B looks for the point of peak intensity 325 in the reference distribution plot 310. Although the intensity axis has been intentionally left off of the plot 305 shown here, the point of peak intensity 325 would be the point at which the reference distribution plot 310 extends the farthest into the intensity dimension (the tallest peak that would extend up out of the figure if intensity were plotted.

This point of peak intensity 325 is used to draw a separation line 320 on the graph perpendicular to the hue axis (it would be a plane if drawn in three dimensions). This line is used to determine relative percentages of clean grain, MOG, and cracked or broken grain in the following way:
- A point inside the reference distribution plot 310 will be considered to represent clean grain.
- A point outside of the reference distribution plot 310 and ABOVE the separation line 320 will be considered to represent MOG.
- A point outside of the reference distribution plot 310 and BELOW the separation line 320 will be considered to represent cracked or broken grain.

The above bullets assume that the hues are plotted such that the colors representing MOG will be more likely found toward the top of the two-dimensional plot, and colors representing broken grain will be toward the bottom. The spectrum of hues could be plotted in reverse, and then the sides of the separation line 320 representing MOG and broken grain would be flipped.

In the method outlined above, the data captured in the photosite array 209 can be analyzed without ever forming an actual image. Stated another way, to create an image from the data captured by photosite array 209, the spatial information (that is, the location of each pixel in relation to every other pixel in the array 209, or its X-Y location in the array 209) must be maintained so that the data makes sense as an image. However, the algorithm described here and in Fig. 3B is only looking at the total distribution of colors in the photosite array 209, without caring about the locations in the photosite array 209 that held the data originally.

An analogy may help better illustrate this concept. Let's imagine that an "image" is the picture printed on a fully assembled jigsaw puzzle, and the unassembled pieces of the puzzle scattered over an area on a table represent the photons captured by the photosite array. In order for an "image-based" grain quality algorithm from the prior art to work, the "jigsaw puzzle" must first be completely assembled (representing the creation of an image) before those algorithms can work.

However, the algorithm illustrated in Fig. 3B does not care about the "image" on the assembled jigsaw puzzle; it only cares about the data represented by the individual puzzle pieces. The subsets 300 (from Fig. 3B) do not have to be created from pixels or elements from consecutive locations in the photosite array 209. The algorithm would work if someone randomly picked puzzle pieces from the box (representing random elements in the photosite array) to form each subset, and the actual puzzle never has to be assembled (that is, no image ever has to be created).

Even though the demosaicing process previously discussed in this specification does not have to be used in the algorithm of the present invention, since no image needs to be created, it can be applied to the data in the photosite array 209 to achieve improved results, as is described briefly in Figs. 3C and 3D.

Fig. 3C describes how the demosaicing process of the prior art works in very high-level terms. It has been discussed previously in this specification that a color filter is placed on top of the photosite array 209 so that each individual "bucket" or element in the photosite array 209 will only capture one color of photon (either red, green, or blue). Turning to Fig. 3C, we focus on a single pixel 335 taken from the upper left corner of the photosite array 209 to describe the process. Each pixel 335 on a photosite array 209 is represented by four elements in the photosite array 209, one red-filtered element 335R, two green-filtered elements 335G1 and 335G2, and one blue-filtered element 335B. For discussion purposes, we will focus on the 335G1 element in Fig. 3C. When the photosite array 209 is used to capture raw photons, it is very likely that photons of red, green, and blue light will all strike the 335G1 element, but, because of the green filter over 335G1, only the green photons will be allowed to actually enter the 335G1 element. Because of this filtering, the 335G1 element will likely be missing detail that is in the point in the physical world corresponding to element 335G1 (that is, the blue and red photons that may have hit the element but been rejected and not counted).

The demosaicing process from the prior art can be used to correct this deficiency. In order to determine the amount of red photons that may have hit the 335G1 element and been rejected, an algorithm can look at the closest red-filtered elements and estimate the amount of red that may have hit 335G1 based on the number of red photons the closest red-filtered elements received.

For example, for element 335G1, an algorithm may look at the red-filtered elements 335R, 335N1, 335N2, and 335N3 to see how many red photons they captured. The red-filtered elements closest to 335G1 (such as 335R and 335N2) will have a greater effect on the calculated red value for 335G1 than those red-filtered elements farther away (such as 335N1 and 335N3). By looking at the closest red-filtered neighbors, an estimated value for the number of red photons that were likely received at element 335G1 is calculated. This new value is put into a new "red-value array" 336 as value R_{G1}, in the location corresponding to the 335G1 element in the original photosite array 209.

Using this method, the demosaicing process will create a new red-value array 336 the same size as the original photosite array 209, as well as a green-value array 337, and a blue-value array 338. The result of this process is that there is now three times as much information (represented by the three arrays 336, 337, and 338) than was captured in the original photosite array. This increase in data can improve the results achieved by the grain quality sensor.

Fig. 3D does not introduce any new concepts, but shows the results of the process from a higher level of abstraction, showing that the data captured originally in the photosite array 209 is multiplied in the process, outputting arrays 336, 337, and 338, one array corresponding to each of the three colors.

Fig. 4A shows the clean grain elevator of a typical combine and the sensors associated with the clean grain elevator 400 as defined for use in the present invention. The clean grain elevator 400 in a combine provides a mechanism for delivering the collected (harvested) grain from the clean grain auger (114, Fig. 1) to the clean grain tank 110. Note that the clean grain auger 114 is partially obscured in Fig. 4A (as it would be behind the bottom of the clean grain elevator 400), but it delivers the "clean grain" collected at the bottom of the cleaning shoe 117 to the clean grain tank 110. Refer to Fig. 1 and Fig. 4A to identify all of the parts referenced herein.

Returning to Fig. 4A, we see that clean grain (or simply "grain") 405 is delivered into the bottom of the clean grain elevator 400 by the clean grain auger 114. Paddles 403 mounted on a delivery conveyor 404 rotate up through the clean grain elevator 400 to deliver the grain 405 to the clean grain tank 110. (Note: In the example shown in Fig. 4A, the conveyor 404 and paddles 403 rotate in a clockwise manner.)

The optical data capture sensor 222 will be mounted such that it can examine the grain 405 before it is deposited in the grain tank 110. There are several methods of mounting the optical data capture sensor 222 to the clean grain elevator 400, and one possible embodiment of such a mounting method is shown in Fig. 4A. In this mounting method, an opening 406 is made in the side of the clean grain elevator 400 such that some of the grain 405 spills into a viewing chamber 409 which is mounted on the clean grain elevator 400. The grain 405 travels through the viewing chamber 409 and is "presented" to the optical data capture sensor 222. The optical data capture sensor 222 is mounted to the viewing chamber 409 such that the lens 204 of the optical data capture sensor (see Fig. 2B) is focused on the contents of the viewing chamber 409. The optical data capture sensor 222 is activated to illuminate the grain 405 held in the viewing chamber 409 and capture photons reflected from the grain 405 using the photosite array (209, see Fig. 2C). Once the data is collected from the grain 405, a return auger 408 takes the sampled grain 405 and deposits it back into the clean grain elevator 400 so that it can continue its journey into the clean grain tank 110.

It should be noted that this method of mounting the optical data capture sensor 222 to the clean grain elevator 400 is only one embodiment, and other means of mounting the optical data capture sensor 222 to the clean grain elevator 400 do exist and may be used in place of the method shown in Fig. 4.

Fig. 4B shows an alternate mounting location and system for the optical data capture sensor 222 (such as a grain quality sensor) of the present invention. The upper portion of a clean grain elevator 400 is shown, showing the paddles 403, grain 405, clean grain tank 110, and unloading auger 402. The yield sensor 401 and moisture sensor 122 shown in Fig. 4A have been removed in Fig. 4B for clarity. In this alternate mounting scheme, the optical data capture sensor 222 is mounted at the top of the clean grain elevator 400, right above the point where the grain 405 is thrown off of the paddles 403 into the clean grain tank 110.

In this location, the optical data capture sensor 222 does not need to have the viewing chamber 409 or the return auger 408, as the flow of grain 405 is not interrupted (no sampling from the elevator 400) is required. Instead, in this location, the optical data capture sensor 222 will capture raw photon data as the grain 405 flies past the optical data capture sensor 220. By capturing photon data as the grain 405 is in flight, a better representation of the grain 405 may be obtained, as it is not packed into a tight viewing chamber 409.

### IV. Yield Sensor and Moisture Sensor

Returning now to look at Fig. 4A, at the top point of the conveyor 404, the grain 405 is thrown into the tank 110 by centrifugal force as the paddles 403 switch directions and begin the descent back down the clean grain elevator 400. Inside the clean grain tank 110, there are optionally two additional sensors provided to collect data for use on the combine.

A yield sensor 401 is placed in the path of the grain 405 that is ejected from the paddles 403. Grain 405 strikes the yield sensor 401 and the yield sensor 401 calculates the amount of grain 405 striking it and calculates the approximate yield (amount of clean grain) entering the tank at any given moment.

The yield sensor 401 may be implemented by a variety of methods. One common method in use today is to have the grain 405 hit an impact plate attached to a load sensor. The force of the grain 405 hitting the impact plate allows the approximate load to be measured and allowing a derivation of approximate mass or material flow rate.

Another means of creating a yield sensor is to base the sensor on an acoustic chamber such as that used by the energy sensing acoustic technology (ESAT) sensors manufactured by Appareo systems, including those disclosed in WO/2012/125575, including the system and method for determining yield and/or loss from a harvesting machine using acoustic sensors, as disclosed in US/2014/0135082, or variants thereof of any of the above described acoustic sensor technologies. An acoustic sensor such as those described in the referenced documents determines the amount of the yield based on the amount of sound generated by an impact on an impact plate sitting atop an acoustic chamber.

Yet another alternate method of determining the yield would be to place load sensors on the upper bearings of the conveyor 404 in the clean grain elevator 400. The load on the sensors could be taken when the clean grain elevator 400 is empty, and then compared to the load on the conveyor 404 when material is flowing through the clean grain elevator 400. The load value when the clean grain elevator 400 is empty could be measured once during a configuration step (perhaps as part of a factory configuration step) and stored in non-volatile memory for subsequent comparison to the load value when crop is present. The difference between the two readings would represent the mass of the clean grain (and hence give the yield).

In addition to a yield sensor, a moisture sensor 122 may also be placed inside the clean grain tank 110. There are various ways to implement a moisture sensor 122 available in the art. One such common type of moisture sensor 122 is a capacitive sensor. A capacitive sensor measures moisture by monitoring the change in the dielectric properties of grain. Another common type of moisture sensor 122 uses near-infrared (NIR) wavelengths of light to detect moisture. This is done by shining two different wavelengths of NIR on a sample. One of the wavelengths is calibrated for moisture and the other as a reference. The ratio of the two signals is derived electronically to calculate the moisture content. The convoluted nature of NIR spectra can require broadband illumination, a spectrometer, and chemo-metric calibration methods to accurately extract moisture. Often the moisture sensor 122 collects samples of crop 405 in the clean grain tank 110 in a funnel-shaped cup, performs the analysis, and then releases the crop 405 such that it drops to the bottom of the tank 110 and can be offloaded subsequently by an unloading auger 402.

One improvement on the prior art use of NIR moisture measurement is the used of two or more MEMS spectrometers. MEMS spectrometers are smaller and less expensive than traditional spectrometers, making them perfectly suited for such applications. When at least two spectrometers are used, one could be used to measure the crop sample and the other could be used to measure the light source itself. The spectroscopic measurement of the light source can be used as the "standard" or control data against which the spectroscopic measurement of the crop sample is compared, allowing for highly accurate measurements that are free from environmental variations.

Fig. 4A illustrates one embodiment of an optical data capture sensor 222, a yield sensor 401, and a moisture sensor 122. The example illustration in Fig. 4A is not intended to be limiting, and other embodiments of the sensors can be created without deviating from the inventive concept captured herein. These sensors provide data items which may be used independently (perhaps displayed to an operator), or in some combination in a combine control algorithm.

### V. Alternative Grain Quality Sensor 1002

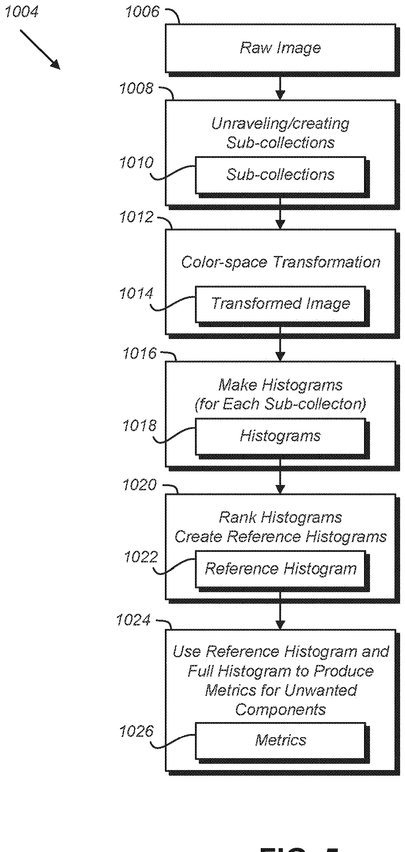

An alternative grain quality sensor 1002 is shown in Figs. 5-7. The grain quality sensor accommodates efficient identification of the composition of a harvested crop sample 200. This embodiment of a grain quality sensor 1002 is configured to transform raw red, green, blue (RGB) image data into the three-dimensional hue, saturation, and lightness (HSL) color space and to identify the composition of clean grain, cracked grain, and MOG within the harvested crop sample 200 without requiring pre-recorded reference values. Alternatively, the grain quality sensor 1002 can be configured to identify different components and/or factors of a crop sample 200. Such analysis of a grain sample 200 can be relayed to a control system for automatically adjusting components and internal settings of a combine harvester 500 to optimize crop yield.

This embodiment of a grain quality sensor 1002 can be implemented with the same physical structure as the grain quality sensor 222 above, shown in Figs. 2B-4B. This includes a view of the harvested grain sample 200; an outer enclosure 214; a lens 204; one or more illumination sources 211; and a photo-detector including a color light filter 260, a photosite array 209, and an electronic processing unit 212. In a preferred embodiment, the grain quality sensor 1002 is configured to view cleaned grain within a combine harvester 500 and to be positioned near the entry point of a clean grain tank 110, in the same manner the grain quality sensor 222 is displayed in Fig. 4B. This positioning accommodates viewing and analyzing the quality of a harvested grain sample 200 after it has been processed through the combine 500 and as it enters the clean grain tank 110. This placement of the grain quality sensor 1002 also allows for placement of other types of sensors, including but not limited to grain yield sensors and moisture sensors, in close proximity to the grain quality sensor 1002. However, alternatively, the grain quality sensor 1002 can be positioned elsewhere within the combine harvester 500, as desired. For instance, an embodiment of the grain quality sensor 1002 is configured for placement within a viewing chamber 409 built into the side of a clean grain elevator 400, as grain quality sensor 222 is shown in Fig. 4A.

The photo-detector in this embodiment of the grain quality sensor 1002 is configured for determining the wavelengths of reflected and/or fluoresced light from the crop material 200 being viewed. The photo-detector processing unit 212 is configured for providing power for the photo-detector and the light sources 211, for controlling inputs and outputs from the grain quality sensor 1002, and for performing image processing functions and statistical grain quality analysis 1004. The image processing functions and statistical analysis 1004 includes comparing the wavelengths of reflected and/or fluoresced light from each material within the crop sample 200 to the wavelengths of reflected and/or fluoresced light from other materials within the sample 200. Further, after some statistical analysis, the processing unit 212 is configured for determining the proportions of clean grain, damaged grain, and MOG within the sample 200.

A lens 204 or a fiber optic is configured for placement between the material 200 to be viewed and the photo-detector in this embodiment. This limits the spatial extent of the material 200 in view of the photo-detector, allowing for light reflected or fluoresced in response to light from the illumination source(s) 211 to strike the photo-detector from only one object within the crop sample 200 at a time. However, alternative embodiments of the grain quality sensor do not include a lens of fiber optic. In a preferred embodiment, a lens 204 is configured to direct reflected and/or fluoresced light from the crop material 200 onto a two-dimensional photosite detector array 209 allowing for reflectance and/or fluorescence values from different areas of the material 200 to be compared in a statistical manner within an instant of time. Further, the photo-detector includes a color image sensor 260 configured for providing course wavelength specificity of the light reflected and/or fluoresced by the crop material 200, adding dimensions to the reflectance and/or fluorescence being compared. Additionally, the light sources 211 are capable of producing narrow wavelength bands, which, coupled with the photo-detector, provide fine wavelength specificity at discrete points in the light spectrum. Use of specific wavelengths can provide the most contrast between different components within the crop material 200, which can improve accuracy of image processing functions and statistical analysis 1004.

In one exemplary embodiment of the grain quality sensor 1002, the light source 211 comprises LEDs configured for illuminating the material 200 with three different wavelengths of light. Alternatively, different types of light sources may be used instead of LEDs. Additionally, the number of light sources 211 and the particular wavelengths utilized may be varied in different embodiments. In this embodiment, the lens 204 collects light reflected and/or light fluoresced from the material 200 and forms image data on a color image sensor 260. The particular LED emission spectra are chosen to correspond to wavelengths having maximum color contrast. In a preferred embodiment, the three emitted wavelengths are lime green, deep red, and ultraviolet (UV), however, different variations of green light, red light, ultraviolet light, and/or other wavelengths of light may alternatively be used. Red light is chosen because it registers strongly with red photosites on an RGB array, with minimum registration in green photosites. Similarly, green light registers strongly with green photosites, with minimum registration in red photosites. UV light is chosen to specifically highlight broken or damaged kernels within the material 200. Differences in fluorescence provide maximum contrast between the reflective starchy interior of grain and the outer casings, or bran. The grain quality sensor 1002 of the present embodiment is configured to pick up differences in fluorescence and reflectance, without specifically discriminating between the two phenomena.

The grain quality sensor 1002 is configured to record reflectance and/or fluorescence values from color image R, G, and B channels of the crop material 200 to identify reflected and/or fluoresced light pixels belonging to clean grain, broken grain, and MOG. Relative color and brightness values of the reflected and/or fluoresced pixels are analyzed to determine the distribution values for clean grain, and pixels outside the range of clean grain pixels are deemed to be MOG or broken grain pixels. This process of using relative color rather than absolute color for identification and grouping allows for identification of components without requiring a reference list of values associated with different components of the crop sample 200. The present grain quality sensor 1002 is configured to transform the image data from the RGB color space to the hue, saturation, and lightness (HSL) color space. The HSL space provides a three-dimensional representation of points in the RGB color model, and the HSL space is advantageous because it removes light intensity, or brightness, from the color information. Hue is the position on the color wheel; saturation is defined as the colorfulness of a color relative to its own brightness; and lightness is the brightness relative to the brightness of a similarly illuminated white.

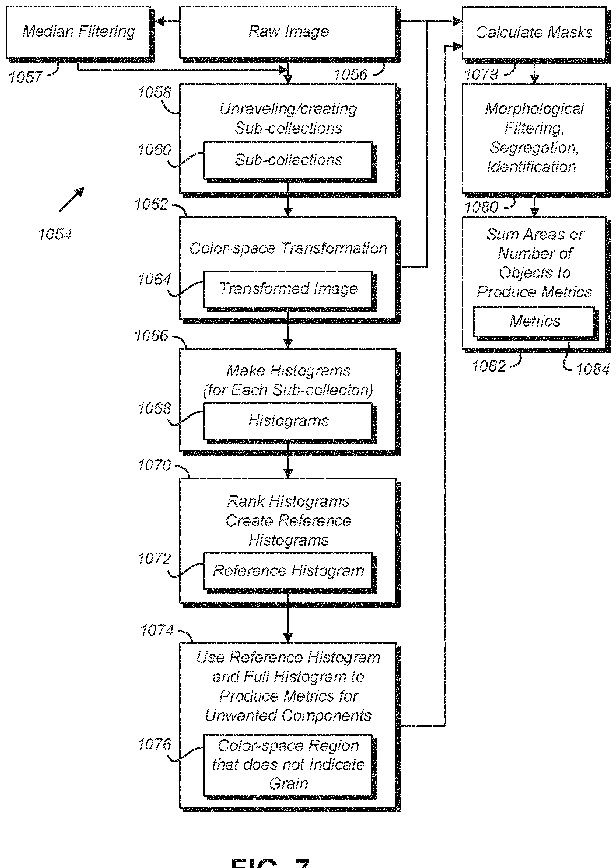

The image processing functions and statistical analysis 1004 in this embodiment of the grain quality sensor 1002 are shown in Fig. 7. The processing unit 212 is configured to receive raw image data 1006 from the photosite array 209. In step 1008, the processing unit 212 is configured to unravel the raw image data 1006 and split the distribution pixels into sub-collections or sub-distributions 1010 corresponding to different subsets within the image data 1006. The formed sub-collections 1010 are then transformed from the RGB color space into the HSL color space in step 1012, producing transformed image data 1014. At step 1016, the processing unit 212 is configured to plot distributions of each sub-collection 1010 of the transformed image data 1014 in each HSL color space dimension, making hue, saturation, and lightness histograms 1018 for each sub-collection 1010 of the transformed image data 1014. In step 1020, the processing unit 212 is configured to rank the histograms 1018 from the narrowest distribution to the widest distribution in each HSL color space dimension and to create a reference histogram 1022 for clean grain in each dimension.

By nature of the grain quality sensor 1002 being configured to view the crop material 200 after being processed through the harvester 500, some of the image subsets 1010 will only include clean grain 201. Subsets or sub-collections 1010 with only clean grain 201 will have the narrowest distributions in the color space. Therefore, the narrowest sub-distributions can be used to identify the distribution of clean grain. Figs. 6A-6B show image data sub-collections 1010 of the crop sample 200 and histograms 1018 plotting hue pixel distributions for each sub-collection 1010. The image sub-collections 1010 in Fig. 6A include only clean grain 201, and thus, the corresponding histograms 1018 have narrow hue wavelength distributions. In contrast, the image data sub-collections 1010 in Fig. 6B include some sub-collections 1010 having only clean grain 201 as well as other sub-collections 1010 with clean grain 201 plus MOG 203 and/or damaged grain 202. Accordingly, the corresponding plotted histograms 1018 include a range of narrow and wider distributions of reflected and/or fluoresced hue pixels and more variance in the particular wavelengths of light reflected and/or fluoresced.

By ranking the three-dimensional color space histograms 1018 from the narrowest spread to the widest spread 1020, using the vector sum of the standard deviation with appropriate weight in each dimension, reference histograms 1022 can be produced as part of the image processing and statistical analysis 1004 without requiring the integration of pre-recorded reference values. A predetermined number of the histograms 1018 having the narrowest spread (preferably, approximately 10%) is taken from the ordered collection to make a reference histogram 1022 for clean grain in each of the hue, saturation, and lightness dimensions.

In step 1024, the processing unit 212 is configured to compare each histogram 1018 to the appropriate clean grain reference histogram 1022, producing metrics 1026 for unwanted components within the harvested crop 200, namely distributions representing damaged grain and MOG. Any pixel outside of the clean grain reference distribution 1022 in each HSL dimension is identified as a non-grain pixel. Some softening of distribution boundaries and/or thresholding can optionally be applied to adjust sensitivity and/or eliminate dark, noise-prone pixels from consideration. Broken or damaged grain pixels can be easily sorted from MOG pixels because the starchy interior of grain appears purple, white, and/or blue compared to MOG in response to UV illumination. Broken grain and MOG can further be distinguished if they lay on different sides of the main distribution of a histogram 1018 in a particular dimension. This sub-collection and pixel identification analysis is conducted for the crop material 200 in each of the hue, saturation, and lightness dimensions to further improve pixel categorization and to identify a region in the three-dimensional HSL space that belongs to clean grain. This information can be used to determine the composition of different components within the crop sample 200, which metrics 1026 can then be relayed to the harvester control system to aid in crop yield optimization of the harvester 500.

The aforementioned grain quality sensor 1002 and method of identifying clean grain, broken grain, and MOG can be adapted for use in any alternative color space, such as the RGB space, the HSV space (also known as the HSB space, where "B" stands for brightness), or any other color space. Further, a user can define his or her own color space, apart from the traditional concepts of hue and color, for use with the grain quality sensor 1002 and method. Additionally, the image sensor of the grain quality sensor 1002 can be configured to provide spatial information for the crop material 200. Alternative embodiments of the grain quality sensor could be configured to perform image processing functions and statistical analysis of reflectance values obtained using a single photosite, which may or may not be color sensitive, rather than using a photosite array capturing image data from moving grain.

The grain quality sensor 1002 includes an acoustic triggering component. The acoustic triggering component is configured to detect patterns of sound waves resulting from crop material 200 being thrown from grain elevator paddles 403 at the top of the grain elevator 400 in proximity to the grain quality sensor 1002. This audio information is then used to initiate function of components of the grain quality sensor 1002, which may include the illumination source(s) 211 and image data capturing and processing 1004, at the proper time to produce optimal crop sample image data 1006. Such an acoustic triggering component includes a microphone placed in proximity to the top of the grain elevator 400 and the grain quality sensor 1002 and connected to the processing unit 212. The microphone is configured for detecting sound waves in its proximity, for transforming the detected sound waves into electrical signals, and for sending the electrical signals as input to the processing unit 212. The microphone may be a Micro-Electrical-Mechanical System (MEMS) microphone or any other type of microphone capable of transforming sound waves into electrical signals.

Crop material 200 is thrown from a grain elevator paddle 403 at the top of the grain elevator 400 into the clean grain tank 110 when the elevator conveyer 404 causes the paddle 403 to make a sharp turn downward. In this embodiment, the microphone is configured to detect sound waves, or audio, resulting from crop material 200 striking the top of the grain elevator 400 and/or the grain quality sensor 1002 outer enclosure 214 after the crop material 200 is thrown from a grain elevator paddle 403 towards the clean grain tank 110. The processing unit 212 in this embodiment is further configured to carry out acoustic sound wave processing and statistical analysis to determine a pattern of crop material 200 hitting the top of the grain elevator 400 and/or grain quality sensor enclosure 214 to aid in optimization of image data capturing.

The processing unit 212 includes an audio downsampling filter configured for reducing the data rate of the audio data to make it quicker to process and to shape it into more meaningful and useful information. The downsampling filtering uses the volume of the original audio data to create a waveform which clearly shows the presence or absence of material near the grain quality sensor 1002. Using the downsampled audio data, the processing unit 212 is configured to determine the arrival frequency of the grain elevator paddles 403, since the paddles 403 are designed to be evenly spaced apart, and to determine the phase of the arrival frequency. The processing unit 212 of this embodiment further uses the arrival frequency and phase information to predict when the next grain throws will occur and to calculate a timing offset to trigger application of components of the grain quality sensor 1002 at the most opportune time to capture image data, or photons. An image data feedback loop provides feedback to the processing unit 212 regarding the quality of the image data 1006, and the processing unit 212 adjusts the image capture timing offset accordingly to optimize the timing of image capturing.

In some embodiments of a grain quality sensor 1002 having an acoustic triggering component, the processing unit 212 sound wave processing and statistical analysis may further include grain throw edge detection, which uses an audio threshold to determine when grain is heard and when grain is not heard. Further, the sound wave processing and statistical analysis may include steady point following, which uses audio threshold information to produce and/or adjust reference timestamps for each grain throw and record the length of each grain throw.

Such an acoustic triggering component and sound wave processing can be adapted to predict the timing of any other type of periodic delivery system for material. For instance, an acoustic triggering component could be positioned near an auger within the combine harvester 500 to predict the timing of crop material 200 being delivered from the auger.

The grain quality sensor 1002 processing unit 212 can optionally be further configured to conduct additional image processing functions and statistical analysis steps to provide additional information and/or improve accuracy. Fig. 7 shows an alternative process for image processing functions and statistical analysis 1054 of the grain quality sensor 1002. The processing unit 212, in this embodiment, is configured to receive raw image data 1056 from the photosite array 209. The processing unit 212 can be configured to then median filter 1057 the raw photo data 1056. Median filtering 1057 can improve accuracy of the image processing and statistical analysis 1054 by reducing the spread of reflectance and/or fluorescence values observed from a single object within the crop sample 200, reducing overlap of histograms to more easily distinguish between different components.

In step 1058, the processing unit 212 is configured for unraveling the image data 1056 and creating sub-collections 1060 of distribution pixels corresponding to different subsets of the image data 1056. Next, in step 1062, the sub-collections 1060 are transformed from the RGB color space into the HSL color space, forming transformed image data 1064. In alternative embodiments, the processing unit 212 can be configured for performing other types color space transformations. In this embodiment, the processing unit 212, at step 1066, is configured to create histograms 1068 of pixel distributions for each sub-collection 1060 in each HSL color space dimension, forming hue, saturation, and lightness histograms 1068. The histograms 1068 are then ranked, in step 1070, from the narrowest distribution to the widest distribution in each HSL color space dimension to create reference histograms 1072 for clean grain. The narrowest of the sub-collection 1060 distributions can be used to identify the distribution of clean grain, accommodating image processing and statistical analysis 1054 without requiring pre-recorded reference values associated with different components of the crop sample 200. To create the clean grain reference histograms 1072, a predetermined number of the histograms 1068 having the narrowest distributions (approximately 10% in a preferred embodiment) is selected from the ordered collection to form a reference histogram 1072 for clean grain in each of the hue, saturation, and lightness dimensions.

At step 1074, the processing unit 212 is configured to compare the sub-collection histograms 1068 to the corresponding clean grain reference histograms 1072 to produce metrics for unwanted components within the harvested crop 200 and to determine regions 1076 in the HSL color space that do not indicate clean grain. The raw image data 1056; the transformed HSL color space image data 1064; and/or the determined regions in the color space indicating unwanted components 1076 can be used to calculate visual masks for the reflected and/or fluoresced pixel data, in step 1078, to provide more accurate image processing and statistical analysis 1054. For example, the reflectance and/or fluorescence distribution values of clean grain may be used to mask the original image to identify MOG and/or cracked grain distributions.

In step 1080, the processing unit 212 is configured for performing mathematical morphological (MM) transformations to further improve the accuracy of the image processing and analysis 1054, utilizing the spatial information contained in image data. Such morphological transformations may include, but are not limited to, erosion, dilation, skeletonization, filtering, and/or segregation. These morphological transformations use the spatial information to allow for identification of entire objects within the crop sample 200, even if some of the reflected and/or fluoresced pixel values fall within the distribution of clean grain. Additionally, random, isolated pixels with values outside the main distribution of grain could be removed from consideration. In step 1082, the processing unit 212 is configured to sum the identified areas or calculate the number of identified objects within the crop sample 200 to produce metrics 1084 for the components within the crop sample 200. These composition metrics 1084 can then be relayed to the combine harvester control system to aid in crop yield optimization of the harvester 500.

### VI. Grain Sensing System 1102 and Method

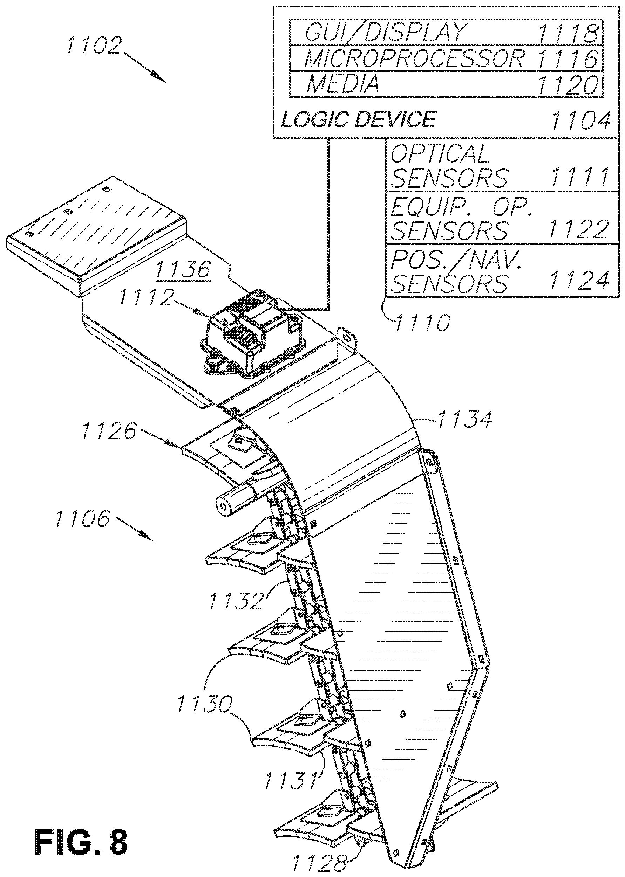

Figs. 8-11 show a grain sensing system 1102 and method. The system 1102 includes a logic device 1104 connected to and controlling the operation of a piece of equipment 1106 handling grain 1108. Without limitation, the equipment 1106 can comprise, for example, a combine (harvester) or a grain elevator. The logic device 1104 receives inputs from a sensor subsystem 1110 including a particle sensor 1112. The particle sensor 1112 comprises a microphone for acoustic sensing. The logic device 1104 can be programmed to apply an adaptive algorithm controlling the equipment 1106 operation in response to acoustic and motion sensing signals from the particle sensor 1112. The particle sensor 1112 is preferably mounted on a printed circuit board (PCB) 1114, which is connected to and provides input to the logic device 1104.

The logic device 1104 can comprise, for example, a programmable microprocessor 1116 connected to a graphic user interface (GUI) and a display (e.g., a monitor) 1118 with media 1120 (e.g., internal or external memory). Alternatively, an application specific integrated circuit (ASIC) or a field programmable gate array (FPGA) can be utilized in place of a programmable microprocessor. Still further, various other analog and/or digital circuits and devices can be used in implementing the present invention. For example, the logic device can comprise a binary or a quantum computer. The logic device 1104 can be specifically dedicated to the grain sensing system 1102, or it can control the piece of equipment 1106. For example, a programmable computer on a combine can control its operations via a network of equipment operation sensors 1122. Moreover, the logic device 1104 can connect to a positioning/navigation sensor subsystem 1124 with global navigation satellite system (GNSS) capabilities for guiding the equipment 1106 and controlling its operation based on positioning and navigation inputs.

The sensor subsystem 1110 also includes an optical sensor 1111, such as the sensors described above, for monitoring and detecting grain 1108 quality, condition and other characteristics. The sensor subsystem 1110 is exposed to crop 1108 samples that are dynamically moved within the equipment 1106, e.g., by a paddle elevator 1126, or another material delivery system. The elevator 1126 can be, but is not limited to, a clean grain elevator of a combine. The elevator 1126 can include a continuous elevator chain 1128 of paddles 1130 mounted on pivotally interconnected links 1132.

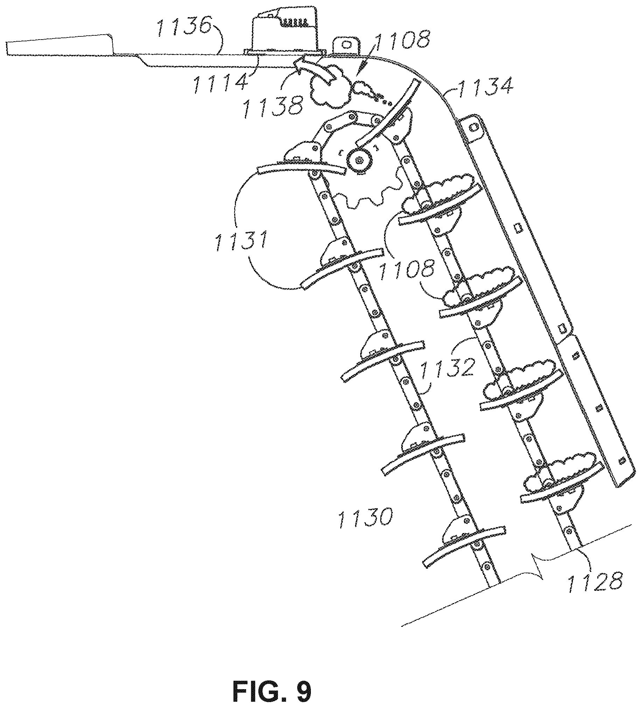

Each paddle 1130 of the elevator 1126 releases a varying quantity of crop 1108 at an apex of the elevator chain 1128 travel path. As shown in Fig. 9, the released crop 1108 can follow a trajectory or throw arc 1138 impacting a top panel 1136 of an enclosure 1134, which mounts the particle sensor 1112. In the normal course of the elevator 1116 function, grain 1108 is intermittently presented to the sensor 1112. Additionally, an edge 1131 of each paddle 1130 may be momentarily present in the field of view (FOV) of an optical sensor 1122, depending on the sensor 1122 position, thus providing an unwanted signal artifact.

Preferably the sensor subsystem 1110 activates and monitors the crop samples 1108 for optimum data collection. For example, the particle sensor 1112 can function as an acoustic trigger, activating the optical sensor 1111. This process enables accurately timing the optical sensor 1111 activation by timing the crop 1108 sample throwing by each paddle 1134 for maximum data capture with a significant grouping of the thrown crop sample in the optical sensor's FOV. Using this information the system 1102 can use data search techniques for the optimum time frame to see when the crop 1108 is actually arriving, thus producing a relatively accurate output signal corresponding to the crop material characteristics of interest.

As the paddle elevator 1126 is in motion, an algorithm begins searching in a particular period of space and time to predict when the particle sensor 1112 detects another grain mass, e.g., impacting the enclosure top panel 1136. The algorithm can estimate the optimal time in which an acoustic or impact signal can be captured and analyzed. Generally, the paddles are evenly spaced in a combine clean grain elevator 1126. Chain wear may necessitate adding or removing links which may disrupt the periodic signal. A typical clean grain elevator includes one extra link inserted between two paddles, which adds an extra 42.7mm of spacing between one set of paddles. The present invention accommodates this condition, which otherwise could disrupt monitoring the flow of grain 1108 being thrown. Periodically an output signal or signature could be out-of-sync with the otherwise periodic acoustic/impact signals. The extra link 1132 on the chain 1128 can disrupt the flow of grain 1108 being thrown past the particle sensor 1112. Also, if the elevator chain 1128 is altered (e.g., stretched), or if a paddle 1130 is removed, the frequency-periodicity variables can be correspondingly altered. Moreover, errors can be introduced into the predictions and expectations of data from the optical sensor 1111 due to the gap between subsequent paddles being wider than the otherwise regular paddle spacing. Solutions include phase-shifting, error correction software routines and down-sampling to appropriate data set sizes.

### VII. Grain Sensing Method

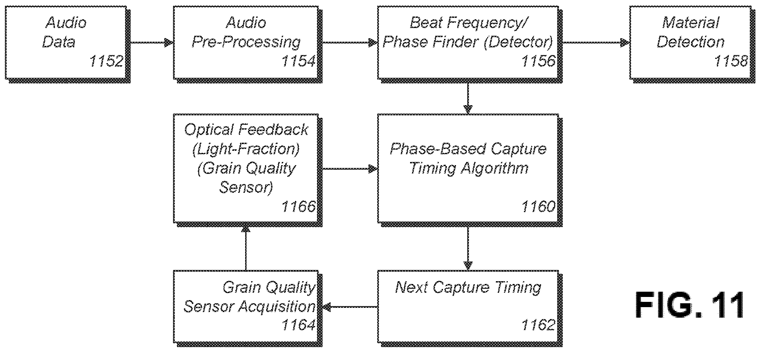

Fig. 11 shows a grain sensing method embodying an aspect of the present invention. Audio data step 1152 utilizes the particle sensor 1112 for detecting and recording acoustic events, e.g., grain 1108 impacting the enclosure top panel 1136. Audio pre-processing 54 utilizes appropriate digitizing, filtering and other signal processing techniques. The arrival frequency (periodicity) and data from a phase finder step 56 is used in a material detection step 58 and a phase-based capture timing algorithm step at 60. The method proceeds to a next capture timing step 62, and then to a grain quality sensor (e.g. optical sensor 1111) acquisition step 64.

### VIII. Additional Alternative Embodiments

The grain sensing system 1102 of the present invention can be installed original - equipment-manufacture (OEM) in new equipment, and can also be retrofit in existing equipment, e.g., grain elevators from various manufacturers in various applications. Due to the grain moving in a linear fashion, a linear detector array combined with rapid acquisitions could produce substantially the same data, where time is exchanged for the spatial dimension in the direction of motion.

### IX. Conclusion

Having described the preferred embodiments, it will become apparent that various modifications can be made without departing from the scope of the invention as defined in the accompanying claims. The examples and processes described herein are meant to be illustrative and describe only particular embodiments of the invention.

## Claims

1. A grain handling system comprising:
a piece of equipment (500;400) configured for moving grain particles;
a sensor subsystem (1002;1110) including a particle movement sensor (1112) and an optical sensor (1111);
said particle movement sensor (1112) comprising a microphone in proximity to a particle movement path and configured for detecting a characteristic of said moving particles and generating an output signal corresponding to said moving particle characteristic;
said optical sensor (1111) configured for detecting an optical characteristic of said grain and generating an output signal corresponding to said optical characteristic; and
said particle movement and optical sensor output signals comprising a sensor subsystem input to a processor (212;1116),
said microphone is configured for detecting sound waves from said particles in said path, for transforming said sound waves into electrical signals, and for sending said electrical signals to said processor;
said processor (212;1116) configured for providing output based on particle movement and controlling an operating variable of said equipment piece in response to particle movement; **characterized in that**,
said processor (212;1116) is configured for analyzing said electrical signals, for determining a pattern of grain particle delivery, for calculating a timing offset for optical data capture, and for triggering optical data capture at said timing offset upon receiving an electrical signal from said microphone.

2. The grain handling system according to claim 1, wherein said processor (212;1116) is further configured for using a feedback loop to adjust said timing offset to improve optical data quality.

3. The grain handling system according to claim 2, which includes functions for downsampling and filtering said electrical signals and computing an arrival frequency and a phase of said electrical signals.

4. The grain handling system according to claim 1 wherein said optical sensor (1111) includes:
an illumination source (211) configured for directing light onto said particle movement path;
a photosite array (209) in proximity to said particle movement path;
a filter (260) between said particle movement path and said photosite array (209);
said filter (260) is configured for limiting passage of light into different parts of said photosite array (209) such that certain locations on said photosite array (209) only receive certain wavelengths of light from said grain particles;
a lens (204) configured for placement within said harvesting machine in proximity to said grain material flow path; and
wherein said lens (204) is configured for picking up light from said grain particles and directing said grain particle light into said filter (260).

5. The grain handling system according to claim 1, wherein said piece of equipment comprises a combine (500).

6. The grain handling system according to claim 1, wherein said piece of equipment comprises a grain elevator (400).

7. The grain handling system according to claim 1, which includes:
an arrival frequency/phase finder detection function using particle movement sensor data set output for activating said acoustic trigger component;
a phase-based capture timing algorithm on said processor timing acquisition of data sets characterizing said moving particles; and
said phase finder compensating for a timing shift in equipment operation and particle movement.

8. The grain handling system according to claim 7, which includes a next capture timing function using said arrival frequency and phase shift for timing a particle presence data set capture.

9. The grain handling system according to claim 1 wherein said processor is configured for distinguishing characteristics of grain samples and determining the proportions of clean grain, damaged grain, and MOG.

10. A method of handling grain in a piece of equipment (400), which method comprises the steps of:
moving grain particles along a particle movement path in said piece of equipment (400);
providing a sensor subsystem (1002;1110) including a particle movement sensor (1112) and an optical sensor (1111);
said particle movement sensor comprising a microphone in proximity to said particle movement path, wherein the microphone detects sound waves from said particles in said path, transforms said sound waves into electrical signals, and sends said electrical signals to a processor (212; 1116);
detecting with said optical sensor an optical characteristic of said grain particles and generating an output signal corresponding to said optical characteristic;
said particle movement and optical sensor output signals comprising a sensor subsystem input to said processor; and
providing said
processor (212;1116) connected to said equipment piece and said sensor subsystem (1002;1110);
controlling with said processor (212;1116) an operating parameter of said equipment piece using input to said processor from said sensor subsystem, **characterized in that**,
the processor (212;1116) analyses said electrical signals, determines a pattern of grain particle delivery, calculates a timing offset for optical data capture, and triggers optical data capture at said timing offset upon receiving an electrical signal from said microphone.

11. The grain handling method according to claim 10, wherein said optical sensor determines a visual characteristic of said grain material selected from the group consisting of: clean grain; damaged grain; material other than grain (MOG); and combinations thereof.

12. The grain handling method according to claim 10, which includes the additional steps of:
using said sound waves to detect particle presence, an arrival frequency and phase offset characteristic of said moving particles;
applying a phase-based capture timing algorithm to said electrical signals; and
adjusting an operating parameter of said equipment with said processor (212;1116) in response to said electrical signals.

## Patentansprüche

1. Kornbehandlungssystem mit:
einem Ausrüstungsteil (500;400), welches geeignet konfiguriert ist, um Kornpartikel zu bewegen;
einem Sensor-Subsystem (1002;1110) mit einem Partikelbewegungssensor (1112) und einem optischen Sensor (1111);
wobei der Partikelbewegungssensor (1112) ein Mikrofon aufweist, welches in der Nähe eines Partikelbewegungspfades angeordnet ist und geeignet konfiguriert ist zum Detektieren eines charakteristischen Merkmals der sich bewegenden Partikel und zum Erzeugen eines Ausgangssignals, welches dem charakteristischen Merkmal mindestens eines sich bewegenden Partikels entspricht;
wobei der optische Sensor (1111) geeignet konfiguriert ist, um ein optisches charakteristisches Merkmal des Korns zu detektieren und um ein Ausgangssignal zu erzeugen, welches dem optischen charakteristischen Merkmal entspricht; und
wobei die Ausgangssignale des Partikelbewegungssensors und des optischen Sensors einen Sensor-Subsystem-Eingang für einen Prozessors (212;1116) aufweisen,
wobei das Mikrofon geeignet konfiguriert ist, um Schallwellen von den Partikeln in dem Pfad zu detektieren, um die Schallwellen in elektrische Signale umzuwandeln und um die elektrischen Signale an den Prozessor zu senden;
wobei der Prozessor (212;1116) geeignet konfiguriert ist, um einen Ausgang auf Basis der Partikelbewegung bereitzustellen und um eine Betriebsvariable des Ausrüstungsteils in Abhängigkeit von der Partikelbewegung zu steuern oder zu regeln, **dadurch gekennzeichnet, dass**
der Prozessor (212;1116) geeignet konfiguriert ist, um die elektrischen Signale zu analysieren, um ein Muster der Kornpartikel-Förderung zu ermitteln, um einen zeitlichen Versatz für die optische Datenerfassung zu berechnen und um mit dem Empfang eines elektrischen Signals von dem Mikrofon mit dem zeitlichen Versatz eine optische Datenerfassung auszulösen.

2. Kornbehandlungssystem nach Anspruch 1, wobei der Prozessor (212;1116) des Weiteren geeignet konfiguriert ist für die Verwendung einer Rückführschleife zur Anpassung des zeitlichen Versatzes zur Verbesserung der Qualität der optischen Daten.

3. Kornbehandlungssystem nach Anspruch 2, welches Funktionen beinhaltet für ein Downsampling und Filtern der elektrischen Signale und für eine Berechnung einer Ankunftsfrequenz und einer Phase der elektrischen Signale.

4. Kornbehandlungssystem nach Anspruch 1, wobei der optische Sensor (1111) aufweist:
eine Beleuchtungsquelle (211), die geeignet konfiguriert ist, um Licht auf den Partikelbewegungspfad zu richten;
ein lichtempfindliches Feld (209), welches in der Nähe des Partikelbewegungspfades angeordnet ist;
einen Filter (260), der zwischen dem Partikelbewegungspfad und dem lichtempfindlichen Feld (209) angeordnet ist;
wobei der Filter (260) geeignet konfiguriert ist, um den Durchtritt von Licht in unterschiedliche Teile des lichtempfindlichen Feldes (209) derart zu begrenzen, dass bestimmte Orte auf dem lichtempfindlichen Feld (209) lediglich bestimmte Wellenlängen des Lichts von den Kornpartikeln empfangen;
eine Linse (204), die geeignet konfiguriert ist für die Anordnung in der Erntemaschine in der Nähe des Kornmaterialflusspfades; und
wobei die Linse (204) geeignet konfiguriert ist, um Licht von den Kornpartikeln aufzunehmen und das Licht der Kornpartikel in den Filter (260) zu richten.

5. Kornbehandlungssystem nach Anspruch 1, wobei das Ausrüstungsteil einen Mähdrescher (500) aufweist.

6. Kornbehandlungssystem nach Anspruch 1, wobei das Ausrüstungsteil einen Korn-Höhenförderer (400) aufweist.

7. Kornbehandlungssystem nach Anspruch 1, welches aufweist:
eine Ankunftsfrequenz-Phasenfindungs-Detektierfunktion, die einen Partikel-Bewegungssensor-Datensatz-Ausgang verwendet zur Aktivierung der akustischen Trigger-Komponente;
einen phasenbasierten Erfassungs-Timing-Algorithmus auf der Prozessor-Timing-Akquisition von Datensätzen, die die sich bewegenden Partikel charakterisieren; und
wobei der Phasen-Finder einen Zeitversatz bei dem Betrieb der Ausrüstung und der Partikelbewegung kompensiert.

8. Kornbehandlungssystem nach Anspruch 7, welches eine nächste oder weitere Erfassungs-Timing-Funktion aufweist, die die Ankunftsfrequenz und die Phasenverschiebung für das Timing einer Erfassung eines Datensatzes für mindestens einen gegenwärtig vorhandenen Partikel verwendet.

9. Kornbehandlungssystem nach Anspruch 1, wobei der Prozessor geeignet konfiguriert ist für eine Unterscheidung von charakteristischer Merkmale von Korn-Proben und für eine Ermittlung der Proportionen fehlerfreien Korns, beschädigtem Korns und MOG.

10. Verfahren zur Behandlung von Korn in einem Ausrüstungsteil (400), wobei der Verfahren die folgenden Verfahrensschritte aufweist:
Bewegen von Kornpartikeln entlang eines Partikelbewegungspfades in dem Ausrüstungsteil (400);
Bereitstellung eines Sensor-Subsystems (1002;1110) mit einem Partikelbewegungssensor (1112) und einem optischen Sensor (1111);
wobei der Partikelbewegungssensor ein Mikrofon aufweist, welches in der Nähe des Partikelbewegungspfades angeordnet ist, wobei das Mikrofon Schallwellen von den Partikeln in dem Pfad detektiert, die Schallwellen in elektrische Signale umwandelt und die elektrischen Signale an einen Prozessor (212;1116) sendet;
Detektieren eines optischen charakteristischen Merkmals der Kornpartikel mit dem optischen Sensor und Erzeugen eines Ausgangssignals entsprechend dem optischen charakteristischen Merkmal;
wobei der Partikelbewegungssensor und der optische Sensor Signale ausgeben, die einen Sensor-Subsystem-Eingang für den Prozessor aufweisen; und
Bereitstellen des Prozessors (212;1116), der mit dem Ausrüstungsteil und dem Sensor-Subsystem (1002;1110) verbunden ist;
Steuern oder Regeln eines Betriebsparameters des Ausrüstungsteils mit dem Prozessor (212;1116) unter Verwendung eines Eingangs für den Prozessor von dem Sensor-Subsystem, **dadurch gekennzeichnet, dass**
der Prozessor (212;1116) die elektrischen Signale analysiert, ein Muster einer Kornpartikel-Förderung ermittelt, einen zeitlichen Versatz für eine optische Datenerfassung berechnet und mit dem Empfang eines elektrischen Signals von dem Mikrofon mit dem zeitlichen Versatz die optische Datenerfassung auslöst.

11. Kornbehandlungsverfahren nach Anspruch 10, wobei der optische Sensor ein visuelles charakteristisches Merkmal des Korn-Materials ermittelt, welches aus der Gruppe gewählt wird, die besteht aus: fehlerfreiem Korn; beschädigtem Korn und anderem Material als Korn (MOG) und einer Kombination dieser charakteristischen Merkmal.

12. Kornbehandlungsverfahren nach Anspruch 10, welches die zusätzlichen folgenden Verfahrensschritte aufweist:
Verwendung von Schallwellen zur Detektierung der Anwesenheit mindestens eines Partikels, zur Detektierung einer Ankunftsfrequenz und einer Phasenversatz-Charakteristik der sich bewegenden Partikel;
Anwendung eines phasenbasierten Erfassungs-Timing-Algorithmus für die elektrischen Signale; und
Anpassung eines Betriebsparameters der Ausrüstung mit dem Prozessor (212;1116) in Antwort oder Reaktion auf die elektrischen Signale.

## Revendications

1. Dispositif de traitement de grain comprenant :
un élément d'équipement (500 ; 400) configuré de manière à déplacer des particules de grain ;
un sous-ensemble de capteur (1002 ; 1110) comportant un capteur de mouvement de particules (1112) et un capteur optique (1111) ;
ledit capteur de mouvement de particules (1112) comprenant un microphone à proximité d'un trajet de déplacement de particules et configuré de manière à détecter une caractéristique desdites particules mobiles et à produire un signal de sortie correspondant à ladite caractéristique de particules mobile ;
ledit capteur optique (1111) étant configuré de manière à détecter une caractéristique optique dudit grain et à produire un signal de sortie correspondant à ladite caractéristique optique ; et
lesdits signaux de sortie de capteurs de mouvement de particules et optique comprenant une entrée de sous-ensemble de capteur vers un processeur (212 ; 1116),
ledit microphone est configuré de manière à détecter des ondes sonores à partir desdites particules sur ledit trajet, à transformer lesdites ondes sonores en signaux électriques, et à envoyer lesdits signaux électriques audit processeur ;
ledit processeur (212 ; 1116) étant configuré de manière à produire une sortie sur la base du mouvement de particules et à commander une variable opérationnelle dudit élément d'équipement en réponse au mouvement de particules ; **caractérisé en ce que**,
ledit processeur (212 ; 1116) est configuré de manière à analyser lesdits signaux électriques, afin de déterminer un modèle de distribution de particules de grain, à calculer un décalage temporel de la capture de données optique, et à déclencher la capture de données optiques avec ledit décalage temporel lors de la réception d'un signal électrique à partir dudit microphone.

2. Dispositif de traitement de grain selon la revendication 1, dans lequel ledit processeur (212; 1116) est, en outre, configuré de manière à utiliser une boucle d'asservissement afin d'ajuster ledit décalage temporel dans le but d'améliorer la qualité de données optiques.

3. Dispositif de traitement de grain selon la revendication 2, qui comporte des fonctions destinées à sous échantillonner et à filtrer lesdits signaux électriques et à calculer une fréquence et une phase d'arrivée desdits signaux électriques.

4. Dispositif de traitement de grain selon la revendication 1, dans lequel ledit capteur optique (1111) comporte :
une source d'éclairement (211) configurée de manière à diriger la lumière sur ledit trajet de déplacement de particules ;
un réseau de photosites (209) à proximité dudit trajet de déplacement de particules ;
un filtre (260) entre ledit trajet de déplacement de particules et ledit réseau de photosites (209) ;
ledit filtre (260) est configuré de manière à limiter le passage de la lumière dans différentes parties dudit réseau de photosites (209) de telle sorte que certains emplacements sur ledit réseau de photosites (209) reçoivent uniquement certaines longueurs d'onde de lumière à partir desdites particules de grain ;
une lentille (204) configurée de manière à être placée à l'intérieur d'une moissonneuse, à proximité dudit trajet d'écoulement de matériau de grain ; et
dans lequel ladite lentille (204) est configurée de manière à prélever de la lumière à partir desdites particules de grain et à diriger ladite lumière de particules de grain dans ledit filtre (260).

5. Dispositif de traitement de grain selon la revendication 1, dans lequel ledit élément d'équipement comprend une moissonneuse (500).

6. Dispositif de traitement de grain selon la revendication 1, dans lequel ledit élément d'équipement comprend un élévateur à grain (400).

7. Dispositif de traitement de grain selon la revendication 1, qui comporte :
une fonction de détection de recherche de fréquence/phase d'arrivée utilisant une sortie de jeux de données de capteur de mouvement de particules afin d'activer ledit composant de déclenchement acoustique ;
un algorithme de séquence de capture basé sur la phase lors de ladite acquisition de jeu de données de séquence de processeur caractérisant lesdites particules mobiles ; et
ladite recherche de phase compensant un glissement temporel sur le fonctionnement de l'équipement et le mouvement de particules.

8. Dispositif de traitement de grain selon la revendication 7, qui comporte une fonction de séquence de capture suivante utilisant lesdits déphasage et fréquence d'arrivée afin de synchroniser une capture de jeu de données de présence de particules.

9. Dispositif de traitement de grain selon la revendication 1, dans lequel ledit processeur est configuré de manière à distinguer les caractéristiques d'échantillons de grain et à déterminer les proportions de grain correct, de grain endommagé et d'autres matériaux MOG.

10. Procédé de traitement de grain dans un élément d'équipement (400), lequel procédé comprend les étapes de :
déplacement de particules de grain le long d'un trajet de déplacement de particules sur ledit élément d'équipement (400) ;
fourniture d'un sous-système de capteur (1002 ; 1110) comportant un capteur de mouvement de particules (1112) et un capteur optique (1111) ;
ledit capteur de mouvement de particules comprenant un microphone à proximité dudit trajet de déplacement de particules, dans lequel le microphone détecte des ondes sonores à partir desdites particules sur ledit trajet, transforme lesdites ondes sonores en signaux électriques, et envoie lesdits signaux électriques à un processeur (212 ; 1116) ;
détection, avec ledit capteur optique, d'une caractéristique optique desdites particules de grain et production d'un signal de sortie correspondant auxdites caractéristiques optiques ;
lesdits signaux de sortie de capteur de mouvement de particules et optique comprenant une entrée de sous-système de capteur vers ledit processeur ; et
fourniture dudit processeur (212 ; 1116) raccordé audit élément d'équipement et audit sous-système de capteur (1002 ; 1110) ;
commande avec ledit processeur (212 ; 1116) d'un paramètre opérationnel dudit élément d'équipement en utilisant une entrée vers ledit processeur à partir dudit sous-système de capteur, **caractérisé en ce que**,
le processeur (212 ; 1116) analyse lesdits signaux électriques, détermine un profil de distribution de particules de grain, calcule un décalage temporel pour la capture de données optiques et déclenche la capture de données optiques avec ledit décalage temporel lors de la réception d'un signal électrique à partir dudit microphone.

11. Procédé de traitement de grain selon la revendication 10, dans lequel ledit capteur optique détermine une caractéristique visuelle dudit matériau de grain sélectionné à partir du groupe constitué par : du grain correct ; du grain endommagé ; un matériau autre que du grain (MOG) ; et des mélanges de ceux-ci.

12. Procédé de traitement de grain selon la revendication 10, qui comporte les étapes additionnelles de :
utilisation desdites ondes sonores afin de détecter une présence de particules, une caractéristique de fréquence et de déphasage d'arrivée desdites particules mobiles ;
application d'un algorithme de séquence de capture basée sur la phase sur lesdits signaux électriques ; et
réglage d'un paramètre opérationnel dudit équipement avec ledit processeur (212 ; 1116) en réponse auxdits signaux électriques.
